# EUROPÄISCHE PATENTSCHRIFT

(11) **EP 3 054 541 B1**
(45) Veröffentlichungstag und Bekanntmachung des Hinweises auf die Patenterteilung: **21.02.2018**
(21) Anmeldenummer: 15153683.6
(22) Anmeldetag: 03.02.2015
(51) Int. Cl.: H02G 1/12

(54) **Abisolierwerkzeug**
Insulation stripping tool
Pince à dénuder

(43) Veröffentlichungstag der Anmeldung: 10.08.2016
(73) Patentinhaber: Wezag GmbH Werkzeugfabrik, 35260 Stadtallendorf (DE)
(72) Erfinder: Zinser, Roman, 35279 Neustadt (DE)
(74) Vertreter: REHBERG HÜPPE + PARTNER

(56) Entgegenhaltungen:
- EP-A2- 2 056 415
- EP-A2- 2 056 416
- US-A- 3 731 561

## Beschreibung

Bei elektrischen Kabeln ist ein elektrischer Leiter, welche insbesondere mit einer Vielzahl von Litzen gebildet sind, zur elektrischen Isolation gegenüber der Umgebung mit einer isolierenden Ummantelung, insbesondere aus Kunststoff, versehen. Für den elektrischen Anschluss des Kabels an Stecker oder beliebige andere elektrische Bauteile muss ein hülsenartiger Teilbereich der Isolierung in einem Endbereich des Kabels beseitigt werden. Hierzu finden Abisolierwerkzeuge Einsatz, welche in einem Schneidteilhub des Abisolierwerkzeugs die Ummantelung in dem Endbereich zumindest teilweise einschneiden und dann in einem folgenden Abziehteilhub den zuvor zumindest teilweise abgetrennten hülsenartigen Teilbereich der Ummantelung "abreißen" und von dem elektrischen Leiter abziehen. Während grundsätzlich möglich ist, dass mit dem Abisolierwerkzeug der hülsenartige abgetrennte Teilbereich der Ummantelung vollständig von dem elektrischen Leiter entfernt wird, kann auch wünschenswert sein, dass der hülsenartige Teilbereich in dem Abziehteilhub lediglich ein kleines Stück auf dem elektrischen Leiter von der restlichen Ummantelung weg bewegt wird. In diesem Zustand schützt der abgetrennte Teilbereich der Ummantelung den elektrischen Leiter während der Bevorratung oder vor der Herstellung der angestrebten elektrischen Verbindung. Ist der elektrische Leiter mit mehreren Litzen ausgebildet, verhindert der nur teilweise abgezogene hülsenartige Teilbereich ein "Aufspleißen" der Litzen, welches die spätere Herstellung der Verbindung mit einem Stecker oder einem anderen elektrischen Bauteil erschweren kann und auch zu einem Abbruch einzelner Litzen führen kann. Wünschenswert kann hierbei sein, dass (bspw. je nach Durchmesser des Kabels, Durchmesser und Material des elektrischen Leiters und/oder Schichtdicke und Material der Ummantelung) die Länge des teilweisen Abziehens der hülsenartigen Ummantelung durch das Abisolierwerkzeug, also die Länge des Abziehteilhubs, individuell eingestellt werden kann.

Im Folgenden wird hinsichtlich des Abisolierwerkzeugs bevorzugt auf die Ausbildung des Abisolierwerkzeugs als Abisolierzange Bezug genommen, ohne dass eine Einschränkung der Erfindung auf die Ausbildung als Abisolierzange erfolgen soll.

### STAND DER TECHNIK

Die Druckschrift DE 37 33 358 C1 offenbart eine Abisolierzange, bei welcher im Bereich eines Zangenmauls von zwei Zangenbacken eine Aufnahme für ein Kabel gebildet ist. Mit Schließung der Handhebel erfolgt zunächst eine Schließung der Zangenbacken. An der Innenseite der Zangenbacken stützen sich beidseits des Kabels Abisoliermesser ab, welche mit zunehmender Schließung der Zangenbacken in einem Schneidteilhub die Ummantelung des Kabels einschneiden. Sind die Zangenbacken und damit die Abisoliermesser in einem einstellbaren Ausmaß geschlossen, für welches ein Einschneiden der Isolierung erfolgt ist, ist der Schneidteilhub beendet. Auf den Schneidteilhub folgt dann ein Abziehteilhub, in welchem die Abisoliermesser gemeinsam parallel zur Längsachse der Aufnahme und damit des Kabels gezogen werden, was zu einem Abreißen der hülsenartigen Ummantelung und dem Abziehen derselben von dem elektrischen Leiter führt. Während dieses Abziehteilhubs gleiten die Abisoliermesser unter Führung durch die Zangenbacken entlang der Zangenbacken. Diese Bewegung wird verursacht durch eine Zugstange. Ein Endbereich der Zugstange ist an scherenartigen Messerhaltern angelenkt, welche die Abisoliermesser tragen. Der andere Endbereich der Zugstange ist ungefähr mittig an einem Steuerhebel angelenkt. Ein Endbereich des Steuerhebels ist an einem beweglichen Handhebel angelenkt, während der andere Endbereich des Steuerhebels über eine Rolle an einer Steuerkulisse geführt ist, die von der beweglichen Zangenbacke ausgebildet ist. Während des Schneidteilhubs liegt die Rolle in einem Endbereich der Steuerkulisse an, womit der Steuerhebel den Schneidteilhub mit der Schließbewegung der Zangenbacken und damit der Abisoliermesser verursachen kann. Für hinreichend große Betätigungskräfte am Ende des Schneidteilhubs überwindet die Rolle eine eine Kraftschwelle vorgebende Erhöhung der Steuerkulisse. Die Rolle gleitet dann entlang der Steuerkulisse, was mit der Betätigung der Zugstange und damit dem Abziehteilhub einhergeht. Am Ende des Abziehteilhubs gelangt die Rolle in den Bereich einer Abwinklung der Steuerkulisse, womit eine Öffnungsstellung der beweglichen Zangenbacke herbeigeführt wird. Mit der Öffnungsbewegung der beweglichen Zangenbacke bewegen sich die Abisoliermesser weg von dem Kabel. Die Länge des Abziehteilhubs ist konstruktiv vorgegeben durch den Abstand des genannten Endbereichs der Steuerkulisse von der Abschrägung der Steuerkulisse. Zu vermuten ist, dass die Länge des Abziehteilhubs durch Dimensionierung der Steuerkulisse derart vorgeben wird, dass diese ausreichend ist, um den hülsenartigen Teilbereich der Ummantelung vollständig von dem elektrischen Leiter abzuziehen. Die Abisolierzange gemäß die Druckschrift DE 37 33 358 C1 besitzt zusätzlich eine Trenneinrichtung zum Durchtrennen eines Kabels zwecks Vorbereitung der Abisolierung, wobei die Trenneinrichtung durch Betätigen der Handhebel betätigt wird. Des Weiteren verfügt die Abisolierzange über eine Einstelleinrichtung, mittels welcher das Ausmaß der Schließbewegung der Abisoliermesser während des Schneidteilhubs einstellbar ist. Eine entsprechende Abisolierzange wird von der Anmelderin unter der Kennzeichnung "Scora 2" vertrieben, vgl. auf die Website www.wezag.de.

Die Druckschrift EP 2 056 416 A2 offenbart eine Abisolierzange, bei welcher die Länge des Abziehteilhubs einstellbar ist, indem mittels eines Anschlags eine Begrenzung der Bewegung einer Zugstange, welche die Abisoliermesser während des Abziehteilhubs parallel zu der Längsachse der Aufnahme für das abzuisolierende Kabel bewegt, erfolgt. Für die konstruktive Ausgestaltung des Anschlags offenbart die Druckschrift EP 2 056 416 A2 unterschiedliche Ausführungsformen: Für eine erste Ausführungsform ist der Anschlag mit einem verschwenkbaren, L-förmig abgewinkelten Hebel ausgebildet, wobei eine Stirnseite eines Schenkels des Hebels den Anschlag für die Zugstange bildet. Somit gibt in der entsprechenden Schwenkstellung des Hebels die Länge des Schenkels, der den Anschlag für die Zugstange bildet, das Ende des Abziehteilhubs vor. Für eine andere Ausführungsform schlägt die Druckschrift EP 2 056 415 A2 die Ausbildung des Anschlags für die Zugstange durch ein Dämpfungsglied vor. Für eine weitere Ausführungsform findet zur Bildung des Anschlags eine Art abgeflachte Nockenscheibe Einsatz, wobei die Nockenscheibe über eine umfangsseitige Verzahnung in unterschiedlichen Winkelstellungen zur Einstellung unterschiedlicher Abzieh-Teilhübe rastierbar ist. Des Weiteren schlägt die Druckschrift EP 2 056 416 A2 die Ausbildung des Anschlags für die Zugstange durch eine Blattfeder vor, welche dem Benutzer der Abisolierzange eine haptische Rückmeldung bei Erreichung des Endes des Abziehteilhubs, welches durch die Blattfeder vorgegeben wird, gibt. Für diese Ausführungsform ist bei Anlage der Zugstange an der Blattfeder und einer Erhöhung der auf die Abisolierzange aufgebrachten Handkräfte unter Erhöhung der elastischen Beaufschlagung der Blattfeder auch eine Vergrößerung des Abziehteilhubs möglich.

### AUFGABE DER ERFINDUNG

Der Erfindung liegt die Aufgabe zugrunde, ein Abisolierwerkzeug vorzuschlagen, welches insbesondere hinsichtlich
- der Prozesssicherheit,
- der Bedienung und/oder
- der Einstellbarkeit der Länge des Abziehens des hülsenartigen Teilbereichs der isolierenden Ummantelung
verbessert ist.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Erfindungsgemäß durchläuft das Abisolierwerkzeug, insbesondere die Abisolierzange, einen Schließhub, währenddessen der Antrieb ohne Richtungsumkehr in eine Richtung betätigt wird. Für eine Abisolierzange kann der Schließhub in der Schließbewegung der Handhebel von einer maximalen oder beliebigen Öffnungsstellung zu einer minimalen oder beliebigen Schließstellung verlaufen.

Die Abisolierzange verfügt im Rahmen der Erfindung zunächst über einen Schneidteilhub. Während des Schneidteilhubs erfolgt eine Schließbewegung mindestens eines Isoliermessers, die quer zu einer Längsachse einer Aufnahme für ein abzuisolierendes Kabel in eine Schließrichtung erfolgt. Hierbei erfolgt in dem Schneidteilhub vorzugsweise eine Schließbewegung in einem Ausmaß, dass das Abisoliermesser zumindest teilweise den Umfang einer Isolierung des Kabels einschneidet oder sogar einen Umfangs-Einschnitt erzeugt.

Des Weiteren verfügt der Schließhub der Abisolierzange über einen Abziehteilhub, der unmittelbar auf den Schneidteilhub folgen kann oder erst nach einen dazwischen angeordneten weiteren Teilhub. Für den Abziehteilhub wird die zuvor herbeigeführte Schließstellung der Abisoliermesser (weitestgehend) beibehalten, während in dem Abziehteilhub die Abisoliermesser parallel zu der Längsachse der Aufnahme für das abzuisolierende Kabel bewegt werden. Da sich die Abisoliermesser noch (weitestgehend) in der Schließstellung befinden, greifen diese in den Einschnitt der isolierenden Ummantelung ein. Mit Bewegung der Abisoliermesser in dem Abziehteilhub liegen die Stirnseiten des hülsenartigen, zumindest teilweise abgetrennten Teilbereichs der isolierenden Ummantelung an dem Abisoliermesser an, so dass das Abisoliermesser in dem Abziehteilhub den hülsenartigen Teilbereich der isolierenden Ummantelung "mitnimmt" und zumindest teilweise von dem elektrischen Leiter abzieht.

Während die Ausstattung einer Abisolierzange mit einem Schneidteilhub sowie einem Abziehteilhub auch bereits aus dem eingangs genannten Stand der Technik bekannt ist, wird erfindungsgemäß der Schließhub zusätzlich mit einem Leerteilhub ausgestattet. Während des Leerteilhubs befindet sich das Abisoliermesser in einer Öffnungsstellung. Hierbei wird unter einer Öffnungsstellung jede Stellung des Abisoliermessers bezeichnet, bei welcher das Abisoliermesser weiter von der Längsachse der Aufnahme entfernt ist als in der Schließstellung während des Abziehteilhubs. Hierbei ist das Abisoliermesser so weit von der Längsachse der Aufnahme entfernt, dass dieses außer Kontakt mit der Stirnseite des abgetrennten hülsenartigen Teilbereichs der isolierenden Ummantelung ist. Das Abisoliermesser kann somit in dem Leerteilhub an dem hülsenartigen Teilbereich vorbeigeführt werden. Befindet sich am Ende des Abziehteilhubs der hülsenartige abgetrennte Teilbereich (mit einem Abstand von der restlichen isolierenden Ummantelung) noch in teilabgezogenem Zustand auf dem elektrischen Leiter, wird der hülsenartige Teilbereich während des Leerteilhubs nicht weiter abgezogen. Hierbei umfasst die Erfindung sowohl Ausgestaltungen, bei welchen in dem Leerteilhub in der Öffnungsstellung der Abstand des mindestens einen Abisoliermessers von der Längsachse der Aufnahme für das abisolierende Kabel konstant ist als auch Ausführungsformen, bei welchen sich der Abstand des Absioliermessers in der Öffnungsstellung von der Längsachse der Aufnahme verändert, so lange gewährleistet ist, dass die Abisoliermesser in dem Leerteilhub nicht in Wechselwirkung mit dem abgetrennten hülsenförmigen Teilbereich treten.

Erfindungsgemäß ist der Übergang vom Abziehteilhub zum Leerteilhub einstellbar, womit der Benutzer individuell die Länge des Abziehteilhubs vorgeben kann, beispielsweise zur Anpassung der Länge des Abziehens an den Durchmesser des Kabels, Material und Durchmesser des elektrischen Leiters und/oder Material und Schichtdicke der Ummantelung. Während durchaus möglich ist, dass sich mit Einstellung des Übergangs vom Abziehteilhub zum Leerteilhub die Länge des Schließhubs ändert, ist vorzugsweise die Länge des Schließhubs unabhängig von dem eingestellten Übergang vom Abziehteilhub zum Leerteilhub.

Die erfindungsgemäße Ausgestaltung kann zu den folgenden Vorteilen führen:
- Für eine Abisolierzange gemäß der Druckschrift EP 2 056 416 A2 ändert sich die Länge des Schließhubs in Abhängigkeit von der Länge des durch den Anschlag vorgegebenen Abziehteilhubs. Dies führt zu nicht uneinheitlichen Prozessbedingungen bei Benutzung der Abisolierzange. Hingegen kann erfindungsgemäß ermöglicht werden, dass der Schließhub unabhängig ist von der Länge des Abziehteilhubs, indem mit einer Vergrößerung [oder einer Verkleinerung] des Abziehteilhubs durch Einstellung des Übergangs in gleichem Ausmaß eine Verkleinerung [bzw. Vergrößerung] des Leerteilhubs erfolgt. Damit liegen bei der Benutzung der Abisolierzange definierte Prozessbedingungen vor. Durchläuft die Abisolierzange den gesamten, dem Benutzer gewohnten Schließhub mit vollständiger Schließung der Handhebel, so ist dafür Sorge getragen, dass ein ordnungsgemäßes Arbeitsergebnis herbeigeführt ist.
- Nach dem teilweisen Abziehen des hülsenförmigen Teilbereichs ist das Kabel weiterhin in der Aufnahme der Abisolierzange angeordnet. Für die Rückbewegung der Abisolierzange in die Ausgangsstellung ist dafür Sorge zu tragen, dass keine Beeinträchtigungen des Kabels mit teilabgezogenem hülsenförmigen Teilbereich erfolgt. Gemäß der Druckschrift EP 2 056 416 A2 bewegen sich die Abisoliermesser nach dem Ende des Abziehteilhubs wieder in entgegengesetzter Richtung parallel zur Längsachse der Aufnahme, wobei diese u. U. mit dem zwischen dem hülsenförmigen Teilbereich und der verbleibenden isolierenden Ummantelung angeordneten freigelegten elektrischen Leiter in Wechselwirkung treten können, womit eine Beschädigung des elektrischen Leiters, eine Beschädigung von Litzen oder auch ein Aufspleißen der Litzen in diesem Bereich erfolgen kann. Hingegen wird erfindungsgemäß in den Leerteilhub nicht die Bewegungsrichtung der Abisoliermesser umgekehrt in Richtung des freigelegten elektrischen Leiters, sondern es erfolgt eine Vorbeiführung der Abisoliermesser an dem hülsenförmigen Teilbereich. Möglich ist sogar, dass am Ende des Leerteilhubs eine Öffnungsbewegung der Abisoliermesser herbeigeführt wird, so dass mit einem an den Schließhub anschließenden Öffnungshub die Abisoliermesser mit einem hinreichenden Abstand an dem teilabgezogenen hülsenförmigen Teilbereich und dem freigelegten Teilbereich des elektrischen Leiters vorbeigeführt werden.

Für eine weitere Lösung der der Erfindung zugrunde liegenden Aufgabe ist das Abisolierwerkzeug, insbesondere die Abisolierzange, mit einem Abisoliermesser ausgestattet. Die Abisolierzange verfügt über eine Aufnahme. In die Aufnahme kann ein abzuisolierendes Kabel eingelegt werden, wobei sich das Kabel in Richtung einer durch die Aufnahme vorgegebenen Längsachse erstreckt. Das Abisoliermesser ist über eine Führung geführt. Hierbei kann die Führung des Abisoliermessers unmittelbar erfolgen oder unter Zwischenschaltung weiterer Komponenten wie eines Messerhalters, eines Führungskörpers u. ä. Erfindungsgemäß besitzt die Führung des Abisoliermessers zwei unterschiedliche Führungsbereiche, nämlich einen Abzieh-Führungsbereich sowie einen Leerteilhub-Führungsbereich:
- Im Abzieh-Führungsbereich ist das Abisoliermesser parallel zu der Längsachse der Aufnahme für ein abzuisolierendes Kabel derart geführt, dass dieses einen ersten Abstand von der Längsachse in der Aufnahme für das abzuisolierende Kabel besitzt. Hierbei ist der erste Abstand kleiner als der Radius der Ummantelung des Kabels. Dies hat zur Folge, dass (nach vorheriger Einbringung des Einschnittes in die Ummantelung) in dem Abziehteilhub-Führungsbereich der hülsenförmige Teilbereich mit einer Stirnseite an dem Abisoliermesser anliegt, so dass in dem Abziehteilhub-Führungsbereich das Abisoliermesser den hülsenförmigen Teilbereich mitnimmt, womit ein Teilabziehen des hülsenförmigen Teilbereichs erfolgt.
- Hingegen erfolgt in dem Leerteilhub-Führungsbereich eine Führung des Abisoliermessers mit einer Bewegungskomponente, die parallel zu der Längsachse der Aufnahme für das abisolierende Kable orientiert ist, während ein zweiter Abstand des Abisoliermessers von der Längsachse der Aufnahme für das abzuisolierende Kabel vorliegt. Dieser zweite Abstand in dem Leerteilhub-Führungsbereich ist größer als der erste Abstand in dem Abziehteilhub-Führungsbereich derart, dass in dem Leerteilhub-Führungsbereich das Abisoliermesser nicht in Wechselwirkung mit dem hülsenförmigen abgetrennten Teilbereich tritt, sondern vielmehr das Abisoliermesser an dem hülsenförmigen Teilbereich vorbeigeführt werden kann. Hierbei umfasst die Erfindung sowohl Ausführungsformen, bei welchen in dem Leerteilhub-Führungsbereich der zweite Abstand konstant ist als auch solche, bei welchen sich der zweite Abstand während des Leerteilhub-Führungsbereichs verändert, solange in dem Leerteilhub-Führungsbereich keine Wechselwirkung zwischen dem Abisoliermesser und dem teilabgezogenen hülsenförmigen Teilbereich auftritt.

Der Übergang vom Abziehteilhub-Führungsbereich zum Leerteilhub-Führungsbereich ist einstellbar, was vorzugsweise erfolgt, ohne dass sich die Länge des Schließhubs der Handhebel erfolgt. Über die Einstellung des Übergangs vom Abziehteilhub-Führungsbereich zum Leer-Führungsbereich kann die Länge des Abziehteilhubs verändert werden.

Im Rahmen der Erfindung kann die Führung grundsätzlich beliebig ausgebildet sein, so lange die genannten Führungsrichtungen und die Abstände wie zuvor spezifiziert gewährleistet werden. Für eine bevorzugte Ausgestaltung der Erfindung ist die Führung mit einen Führungskörper gebildet. An diesem Führungskörper ist das Abisoliermesser (zumindest mit einer Kraftkomponente) quer zur Längsachse der Aufnahme abgestützt, was durch unmittelbare Abstützung erfolgen kann oder unter Zwischenordnung weiterer Bauelemente. Der (ein- oder mehrstückig gebildete) Führungskörper weist eine Führungsfläche auf, die unterschiedliche Teilführungsflächen aufweist:
- Im Abziehteilhub-Führungsbereich ist die Führungsfläche mit einer ebenen Teilführungsfläche ausgebildet, welche gewährleistet, dass das Abisoliermesser in dem ersten Abstand gehalten wird, für welchen die Mitnahme des hülsenförmigen Teilbereichs gewährleistet ist.
- Hingegen ist die Führungsfläche in dem Leerteilhub-Führungsbereich mit einer abgeschrägten Teilführungsfläche ausgebildet, welche dazu dient, infolge der Abschrägung eine Öffnungsbewegung des Abisoliermessers herbeizuführen, so dass dieses außer Eingriff mit dem hülsenförmigen teilabgezogenen Teilbereich kommt. Alternativ oder zusätzlich kann in dem Leerteilhub-Führungsbereich die Führungsfläche mit einer Teilführungsfläche ausgestattet sein, deren Abstand von der Längsachse der Aufnahme von dem Abstand der ebenen Teilführungsfläche im Abzieh-Führungsbereich abweicht. Hierbei kann die Teilführungsfläche eben ausgebildet sein, so dass deren Abstand von der Längsachs der Aufnahme konstant ist, oder gekrümmt ist, so dass sich der Abstand dieser Teilführungsfläche von der Längsachse der Aufnahme verändert, solange gewährleistet ist, dass das Abisoliermesser nicht in Wechselwirkung mit dem teilabgezogenen hülsenförmigen Teilbereich tritt.

Hierbei kann der Führungskörper auf unterschiedliche Weise ausgebildet und in das Abisolierwerkzeug integriert werden:
- Für eine erste Ausführungsform ist der Führungskörper während des Schließhubs ortsfest an einer zugeordneten Werkzeugbacke gehalten. Das Abisoliermesser ist in diesem Fall (unmittelbar oder mittelbar unter Zwischenhaltung weiterer Bauelemente) rollend oder gleitend nach außen an der Führungsfläche des Führungskörpers abgestützt. Soll der Übergang vom Abziehteilhub-Führungsbereich zum Leerteilhub-Führungsbereich eingestellt werden (also insbesondere die Länge des Abziehteilhubs verändert werden) erfolgt dies über eine Verschiebung des Führungskörpers gegenüber der Werkzeugbacke (zumindest mit einer Bewegungskomponente) parallel zur Längsachse der Aufnahme.
- Für eine andere Ausführungsform der Erfindung wird der Führungskörper während des Schließhubs relativ zu der zugeordneten Werkzeugbacke bewegt, was vorzugsweise gemeinsam mit dem Abisoliermesser erfolgt. In diesem Fall erfolgt die Abstützung des Führungskörpers mit der Führungsfläche an einem Abstützkörper, welcher während des Schließhubs ortsfest an der zugeordneten Werkzeugbacke gehalten ist. Um lediglich einige Beispiele zu nennen, kann es sich bei dem Abstützkörper um einen Stift, eine Rolle oder einem anderweitigen Gleitkörper handeln. Soll für diese Ausführungsform der Übergang vom Abziehteilhub-Führungsbereich zum Leerteilhub-Führungsbereich (und insbesondere die Länge des Abziehteilhubs) verändert werden, erfolgt dies durch Verschiebung des Abstützkörpers gegenüber der Werkzeugbacke (zumindest mit einer Bewegungskomponente) parallel zur Längsachse der Aufnahme.

Für die Verstellung des Übergangs und die Fixierung eines derart eingestellten Übergangs gibt es im Rahmen der vorliegenden Erfindung vielfältige Möglichkeiten. Für einen erfindungsgemäßen Vorschlag erfolgt die Sicherung einer Stellung oder unterschiedlicher Stellungen des Führungskörpers oder des Abstützkörpers über eine Rast-, Klemm- oder Verriegelungseinrichtung. Hierbei kann eine derartige Sicherung in einzelnen oder sämtlichen vorgegebenen Stellungen erfolgen oder es ist eine stufenlose Sicherung in einem Stellbereich möglich, wozu dann beispielsweise eine Klemmeinrichtung Einsatz finden kann.

Während wie erläutert das Abisoliermesser (ggf. mit einem Messerhalter) unmittelbar an dem Führungskörper abgestützt sein kann oder diesen sogar unmittelbar ausbilden kann, ist für einen weiteren erfindungsgemäßen Vorschlag zwischen dem Abisoliermesser und dem Führungskörper ein Zwischenkörper angeordnet. Der Zwischenkörper wird von einem Antrieb, insbesondere Handhebeln einer Abisolierzange, gemeinsam mit dem Abisoliermesser bewegt. Der Zwischenkörper bildet dabei eine Kontaktfläche aus, welche gleitend entlang der Führungsfläche des Führungskörpers bewegt wird. Die Nutzung einer Kontaktfläche des Zwischenkörpers für den Kontakt mit der Führungsfläche des Führungskörpers erweitert die Möglichkeiten für eine Gestaltung des Stellbereichs für die Einstellung des Übergangs vom Abziehteilhub zum Leerteilhub und damit auch für die Länge des Abziehteilhubs.

Grundsätzlich kann im Rahmen der Erfindung eine beliebige Gestaltung der Antriebskinematik des Abisolierwerkzeugs Einsatz finden. Für einen besonderen Vorschlag der Erfindung erfolgt der Antrieb über eine Zugstange. Hierbei sind das Abisoliermesser, ein das Abisoliermesser haltender Messerhalter, der Zwischenkörper und/oder der Führungskörper mit der Zugstange gekoppelt. Mit dem Durchlaufen des Schließhubs wird die Zugstange parallel zur Längsachse der Aufnahme des Abisolierwerkzeugs kontinuierlich bewegt, wobei vorzugsweise die Länge der Bewegung der Zugstange parallel zur Längsachse der Aufnahme unabhängig davon ist, welche Länge des Abziehteilhubs eingestellt ist.

Vorzugsweise erfolgt ein Antrieb der Zugstange beispielsweise von Handhebeln einer Abisolierzange derart, dass eine Umschaltkinematik Einsatz findet. Diese Umschaltkinematik gewährleistet, dass während des Schneidteilhubs die Zugstange nicht parallel zur Längsachse der Aufnahme des Abisolierwerkzeugs bewegt wird. Dies kann zur Folge haben, dass sich während des Schneidteilhubs keine unerwünschte Bewegung der Abisoliermesser in Richtung der Längsachse des Kabels ergibt. Andererseits gewährleistet die genannte Umschaltkinematik, dass die Zugstange sowohl während des Abziehteilhubs als während des Leerteilhubs (vorzugsweise kontinuierlich) bewegt wird.

Als Kinematik in dem Abisolierwerkzeug, insbesondere als Umschaltkinematik wie zuvor erläutert, kann eine Kinematik verwendet werden, bei der die Betätigung der Zugstange über einen Druckhebel erfolgt, der in einem Endbereich in einem beweglichen Handhebel angelenkt ist. In einem anderen Endbereich ist der Druckhebel während des Schließhubs rollend oder gleitend an einer Führungsfläche einer beweglichen Werkzeugbacke abgestützt. Gleichzeitig ist der andere Endbereich rollend oder gleitend an der Zugstange abgestützt. Eine Aufteilung der Kraft in dem Druckhebel, welche durch Betätigung des beweglichen Handhebels hervorgerufen wird, erfolgt einerseits in eine Kraftkomponente, welche auf die Führungsfläche der beweglichen Werkzeugbacke wirkt, sowie eine Kraftkomponente, die auf die Zugstange wirkt. Die Aufteilung ist dabei abhängig von der Neigung der Führungsfläche und dem Winkel des Druckhebels. Somit kann die Führungsfläche eine Teilführungsfläche besitzen, in welcher die Neigung der Führungsfläche und der Winkel des Druckhebels derart sind, dass die auf die Zugstange wirkende Kraftkomponente verschwindend ist oder kleiner ist als die Kraft einer die Zugstange in Richtung einer Endlage beaufschlagenden Feder, so dass die Betätigung der Handhebel keine Bewegung der Zugstange bewirkt, sondern ausschließlich einer Bewegung der beweglichen Werkzeugbacke in Schließrichtung, womit der Schneidteilhub erzeugt werden kann. Hingegen kann eine andere Teilführungsfläche vorhanden sein, im Bereich welcher die Neigung der Führungsfläche und der Winkel des Druckhebels derart sind, dass die auf die Zugstange wirkende Kraftkomponente ausreichend ist, damit die Zugstange die Endlage verlässt, womit der Abziehteilhub herbeigeführt werden kann.

Eine weitere Ausgestaltung der Erfindung widmet sich der Betriebssicherheit des Abisolierwerkzeugs. Dieser Ausgestaltung liegt die Erkenntnis zugrunde, dass unter Umständen nachteilig ist, wenn das Abisolierwerkzeug vor und nach der Benutzung, beispielsweise bei der Bevorratung und dem Transport, so geöffnet ist, dass die Abisoliermesser durch das Zangenmaul frei zugänglich sind. Greift beispielsweise der Handwerker in eine Werkzeugkiste, kann dieser bei geöffnetem Zangenmaul mit einem Finger auf das Abisoliermesser greifen, wodurch eine Verletzungsgefahr begründet ist. Möglich ist bspw. auch, dass das Abisolierwerkzeug mit geöffnetem Zangenmaul in eine Werkzeugkiste geworfen wird, wo dann eine anderes Werkzeug so in das Zangenmaul eintritt, dass eine Beschädigung der empfindlichen Schneide des Abisoliermessers erfolgen kann. Dieser Erkenntnis wird erfindungsgemäß Rechnung getragen, indem eine Sicherungseinrichtung vorgesehen wird, mittels welcher das Abisolierwerkzeug in einer zumindest teilweise geschlossenen Stellung sicherbar ist.

Möglich ist, dass die Sicherungseinrichtung manuell betätigt und/oder gelöst wird. Für eine besondere erfindungsgemäße Ausgestaltung ist für das Lösen der Sicherungseinrichtung nicht ein separates Einwirken des Benutzers auf die Sicherungseinrichtung selbst erforderlich. Vielmehr kann für diese Ausgestaltung ein Lösen der Sicherungseinrichtung automatisch mit Betätigung des Antriebs des Abisolierwerkzeugs erfolgen. Für das Beispiel einer Abisolierzange kann beispielsweise die Sicherungseinrichtung aktiviert sein, wenn das Zangenmaul und die Handhebel noch geringfügig geöffnet sind. Betätigt dann der Benutzer die Handhebel der Abisolierzange in Schließrichtung oder sogar in dem verbleibenden kleinen Ausmaß bis zur vollständigen Schließstellung, kann auch mit einer kleinen Schließbewegung des Zangenmauls eine Verrastung oder Verriegelung der Sicherungseinrichtung automatisch gelöst werden, so dass im Anschluss an diese geringfügige Betätigung der Handhebel durch den Benutzer die Entlastung der Handhebel die vollständige Öffnung des Abisolierwerkzeugs ermöglicht, womit das Abisolierwerkzeug für die Bearbeitung eines Kabels bereit ist.

Für einen weiteren Vorschlag der Erfindung wird in das Abisolierwerkzeug eine weitere Funktion integriert, indem dieses auch eine Trenneinrichtung aufweist, mittels welcher ein Durchtrennen eines Kabels möglich ist. In bevorzugter Ausgestaltung der Erfindung ist hierbei die Trenneinrichtung nicht immer offen. Vielmehr ist diese mit einer Schutzeinrichtung verschließbar, womit Verletzungen des Benutzers vermeidbar sind und/oder ein unbeabsichtigtes Durchtrennen eines Kabels im Umgebungsbereich des Abisolierwerkzeugs, beispielsweise im Bereich eines Schaltschranks mit einer Vielzahl von elektrischen, nicht zu durchtrennenden Kabeln, vermieden ist/sind.

Möglich ist hierbei, dass die Schutzeinrichtung manuell vom Benutzer aktiviert und deaktiviert werden kann. Für einen besonderen Vorschlag der Erfindung wird die Schutzeinrichtung allerdings automatisch mit dem Durchlaufen des Schließhubs in eine Schutzstellung überführt. In dieser Schutzstellung verbleibt die Schutzeinrichtung auch nach Beendigung des Schließhubs und mit Wiederöffnung des Abisolierwerkzeugs mit Umkehrung des Schließhubs. Wird somit die Schutzeinrichtung geöffnet und mit der Trenneinrichtung ein Kabel durchtrennt, ist zunächst zu Beginn des folgenden Absisoliervorgangs die Trenneinrichtung noch offen. Mit einmaliger Nutzung des Abisolierwerkzeugs für ein Abisolieren wird aber dann die Schutzeinrichtung automatisch in die Schutzstellung überführt. Für hieran anschließende weitere Abisoliervorgänge mit dem Abisolierwerkzeug ist damit automatisch vermieden, dass die Trenneinrichtung Verletzungen des Benutzers herbeiführt und/oder unbeabsichtigt mit der Trenneinrichtung andere Kabel durchtrennt werden.

Während durchaus möglich ist, dass bei dem Abisolierwerkzeug der Abstand des Abisoliermessers von der Längsachse der Aufnahme am Ende des Schneidteilhubs fest vorgegeben ist, wird für einen weiteren Vorschlag der Erfindung vorgeschlagen, dass an dem Abisolierwerkzeug eine Schneidtiefen-Verstelleinrichtung vorhanden ist. Mittels der Schneidtiefen-Verstelleinrichtung ist es möglich, den Abstand mindestens eines Abisoliermessers quer zu der Längsachse der Aufnahme am Ende des Schneidteilhubs zu verstellen, womit eine Anpassung an unterschiedliche Kabel erfolgen kann.

Durchaus möglich ist, dass an einer Zangenbacke oder beiden Zangenbacken sowohl die Schneidtiefen-Verstelleinrichtung als auch die Einrichtungen zur Gewährleistung des Leerteilhubs und der Verstellung des Übergangs vom Abziehteilhub zum Leerteilhub vorhanden sind. Verbesserte Bauraumbedingungen ergeben sich aber unter Umständen, wenn für eine weitere Ausgestaltung der Erfindung die Schneidtiefen-Verstelleinrichtung einerseits und die Führung des Abisoliermessers mit dem Abziehteilhub-Führungsbereich und dem Leerteilhub-Führungsbereich andererseits an unterschiedlichen Werkzeugbacken angeordnet sind.

In weiterer Ausgestaltung der Erfindung sind die Abisoliermesser auswechselbar. Um lediglich ein Beispiel zu nennen, können die Abisoliermesser auswechselbar an einem Messerhalter gehalten sein, wobei die Abisoliermesser über eine T-Nut-Verbindung an dem Messerhalter gehalten sein kann mit Orientierung der T-Nut quer zur Bewegung der Werkzeugbacken (vgl. insbesondere die nicht vorveröffentlichte europäische Patentanmeldung EP 14 177 826.6, welche hinsichtlich der Verbindung von Abisoliermessern mit Messerhaltern sowie der Montage und Demontage zum Gegenstand der vorliegenden Anmeldung gemacht wird). Für diese Ausgestaltung der Erfindung ist ein Auswechseln der Abisoliermesser nur möglich, wenn der eingestellte Übergang vom Abziehteilhub zum Leerteilhub einem vorbestimmten Übergang entspricht oder in einem vorgegebenen Übergangsbereich liegt. Somit können die Abisoliermesser nicht unbeabsichtigt von dem Abisolierwerkzeug gelöst werden, wenn der eingestellte Übergang vom Abziehteilhub zum Leerteilhub nicht dem vorgegebenen Übergang oder vorgegebenen Übergangsbereich entspricht. Damit wird die Betriebssicherheit erhöht und eine Beschädigung von Abisoliermessern durch ein unbeabsichtigtes Herausfallen vermieden. Für das erläuterte Ausführungsbeispiel kann beispielsweise für einen Übergang vom Abziehteilhub zum Leerteilhub, welcher nicht dem vorgegebenen Übergang oder dem vorgegebenen Übergangsbereich entspricht, die laterale Beseitigung des Abisoliermessers blockiert sein durch eine Gehäuseplatte des Abisolierwerkzeugs. Wird hingegen der Übergang vom Abziehteilhub zum Leerteilhub so eingestellt, dass dieser dem vorgegebenen Übergang entspricht oder vorgegebenen Übergangsbereich liegt, kann die laterale Entfernung des Abisoliermessers bspw. durch ein Fenster oder eine Ausnehmung der genannten Wandung erfolgen, welches oder welche nur in dem lateralen Pfad des Abisoliermessers angeordnet ist, wenn der vorgegebene Übergang eingestellt ist.

Bei der obigen Erläuterung der Erfindung wird auf Orientierungen relativ zu einer Längsachse der Aufnahme Bezug genommen. Hierbei entspricht diese Längsachse der Längsachse des abzuisolierenden Kabels, wenn sich dieses in der Aufnahme bzw. dem Zangenmaul des Abisolierwerkzeugs befindet. Relative Angaben, welche Bezug nehmen auf die Längsachse der Aufnahme, können nur für einen Teilbereich des Schließhubs gelten oder bezogen sein auf eine besondere Stellung der Werkzeugbacken. Ist beispielsweise eine Richtung "quer zu der Längsachse" oder "parallel zu der Längsachse" angegeben, kann eine Abstützung exakt quer zu der Längsachse oder eine Führung parallel zu der Längsachse exakt gegeben sein, wenn die Werkzeugbacken vollständig geschlossen sind, während sich eine Richtung einer Führung oder Abstützung ändern kann, wenn die Werkzeugbacken bewegt werden. Somit umfassen die genannten Formulierungen auch solche Richtungen, bei welchen lediglich eine Richtungskomponente "quer zu der Längsachse" oder "parallel zu der Längsachse" orientiert ist.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt in einer räumlichen Darstellung eine Abisolierzange.
- **Fig. 2**: zeigt die Abisolierzange gemäß Fig. 1 in einer räumlichen, geschnittenen Darstellung.
- **Fig. 3**: zeigt die Abisolierzange gemäß Fig. 1 und 2 in einer geschnittenen Darstellung am Ende eines Schneidteilhubs.
- **Fig. 4**: zeigt ein Detail IV der Abisolierzange gemäß Fig. 3.
- **Fig. 5**: zeigt in einer geschnittenen Darstellung die Abisolierzange gemäß Fig. 1 bis 4 während des Abziehteilhubs.
- **Fig. 6**: zeigt in einer teilgeschnittenen Darstellung die Abisolierzange gemäß Fig. 1 bis 5 während des Leerteilhubs.
- **Fig. 7**: zeigt die Abisolierzange gemäß Fig. 1 bis 6 in einer geschnittenen Darstellung am Ende des Leerteilhubs und des Schließhubs.
- **Fig. 8 bis 11**: zeigen Darstellungen der Abisolierzange entsprechend Fig. 1 bis 7, wobei hier ein anderer Übergang zwischen dem Abziehteilhub und dem Leerteilhub eingestellt ist.
- **Fig. 12**: zeigt in einer räumlichen Darstellung eine weitere Abisolierzange.
- **Fig. 13**: zeigt die die Abisolierzange gemäß Fig. 12 in einer geschnittenen Darstellung.
- **Fig. 14**: zeigt ein Detail XIV der Abisolierzange gemäß Fig. 13.
- **Fig. 15 bis 17**: zeigen eine weitere Ausgestaltung einer Abisolierzange in geschnittener Darstellung in einer Ausgangsstellung (Fig. 15), für teilgeschlossene Handhebel (Fig. 16) und eine verriegelte Stellung mit teilgeschlossenem Zangenmaul (Fig. 17).
- **Fig. 18**: zeigt eine geschnittene Darstellung der Abisolierzange gemäß Fig. 15 bis 17 nach Verschließung einer Trenneinrichtung mit einer Schutzeinrichtung.
- **Fig. 19**: zeigt die Abisolierzange gemäß Fig. 15 bis 18 nach der Wiederöffnung der Handhebel, wobei die Schutzeinrichtung weiterhin die Trenneinrichtung verschließt.

### FIGURENBESCHREIBUNG

In der Figurenbeschreibung wird ein Abisolierwerkzeug 1 in Ausgestaltung als Abisolierzange 2 beschrieben, ohne dass eine Einschränkung der Erfindung auf diese Ausgestaltung erfolgen soll.

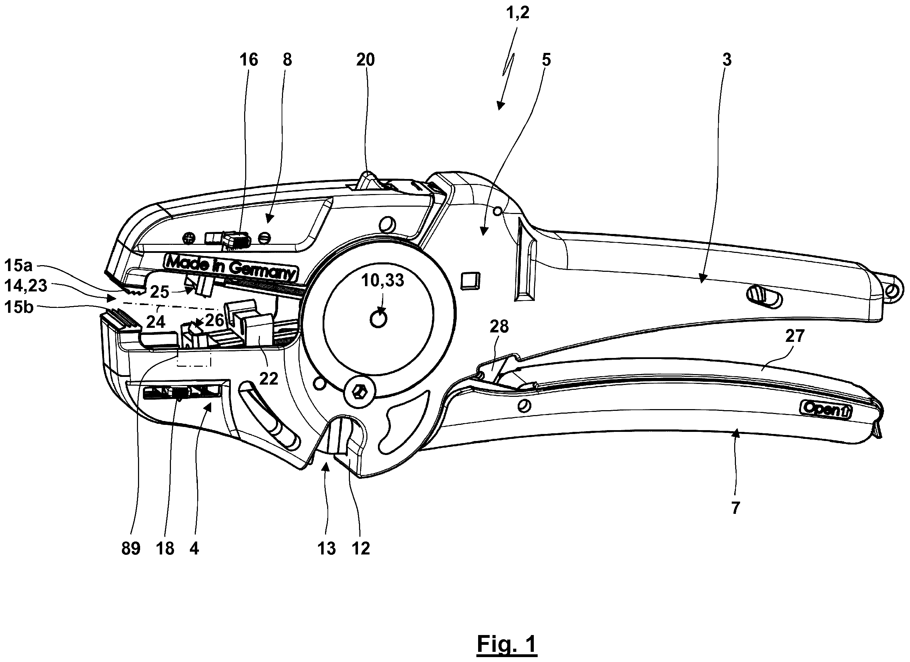

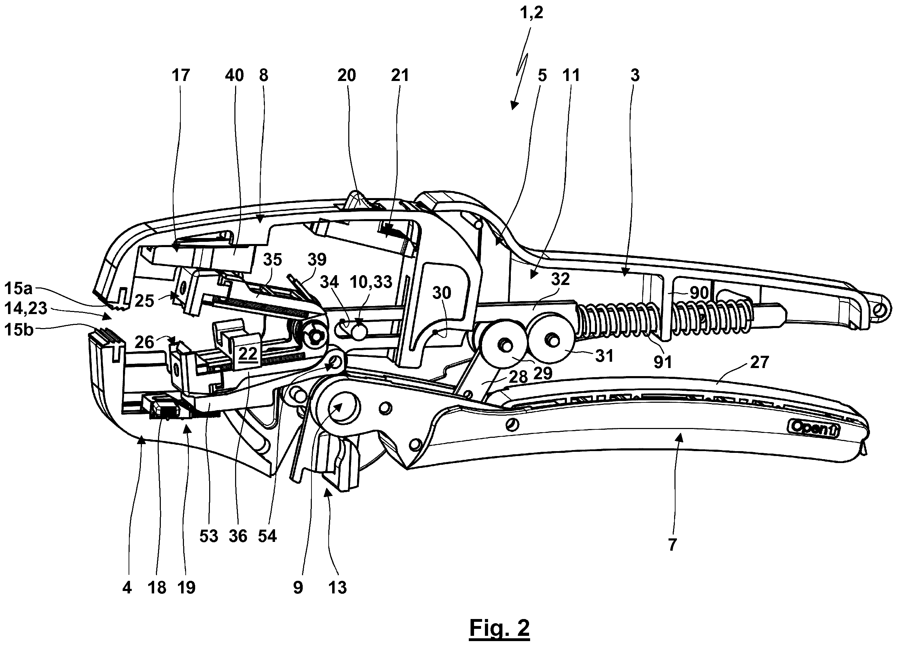

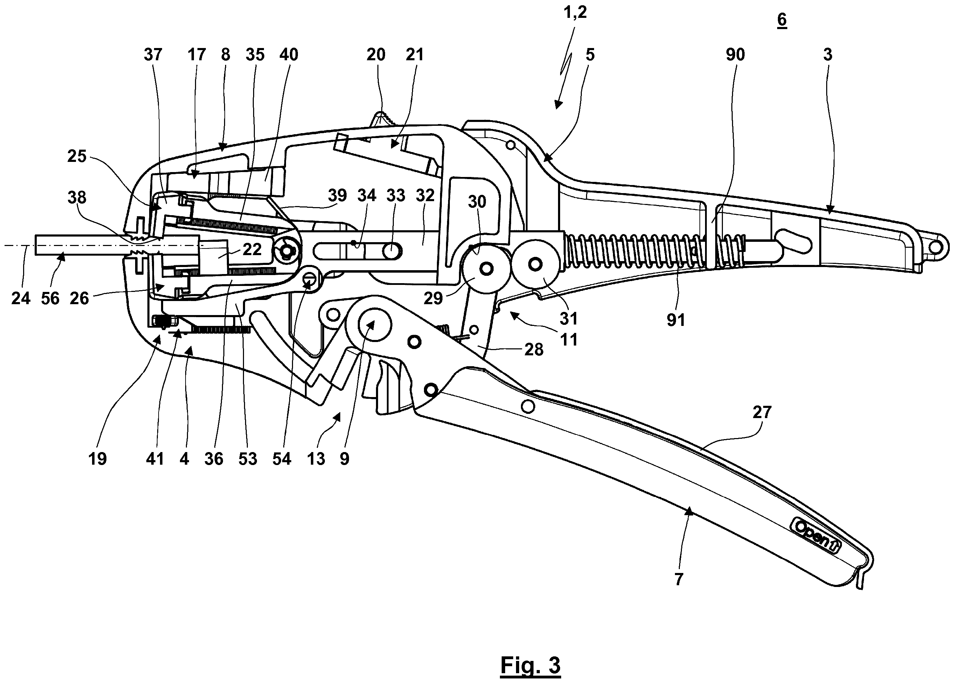

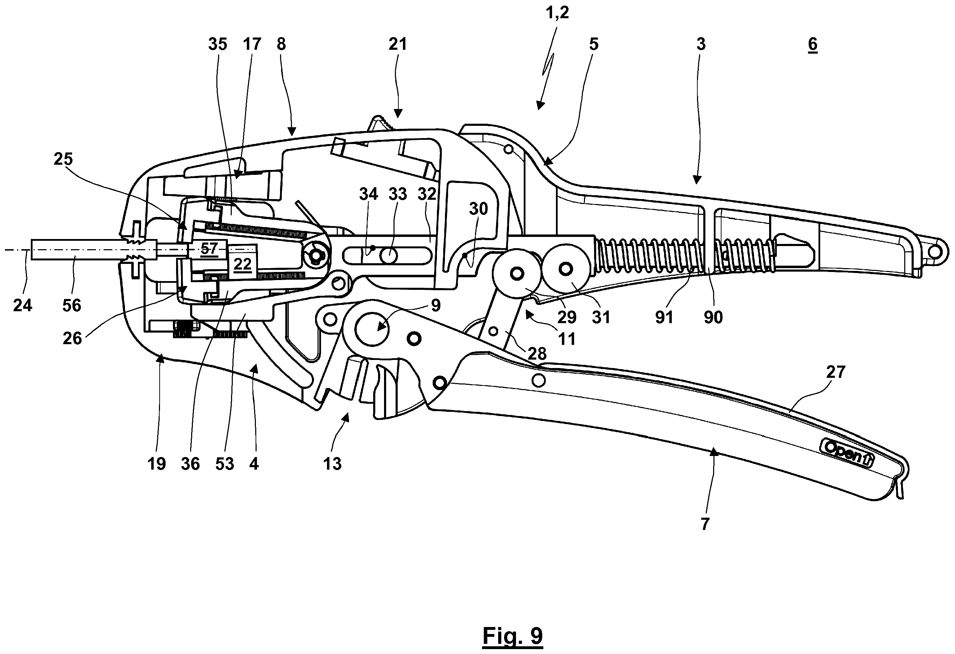

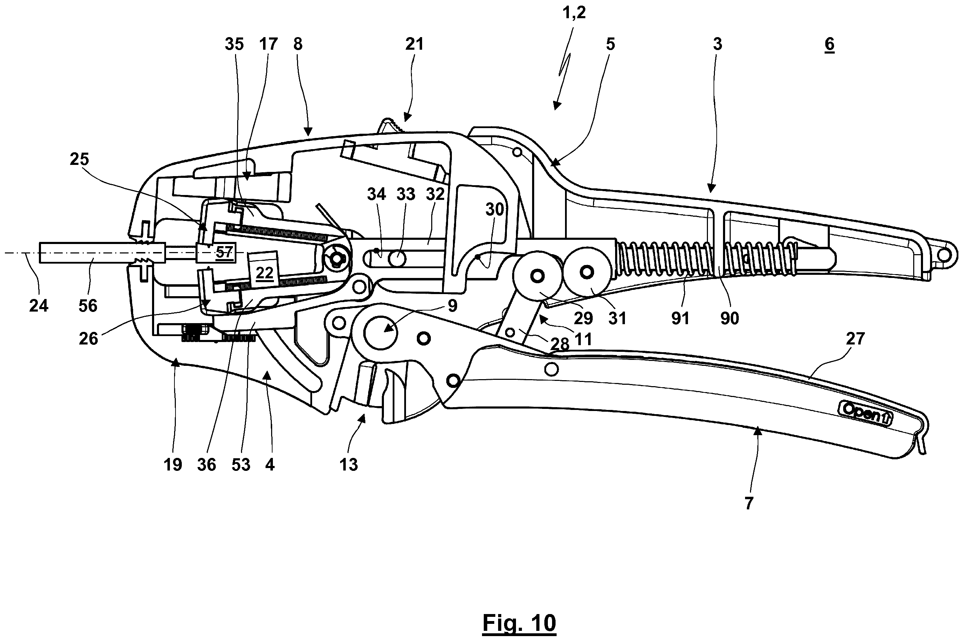

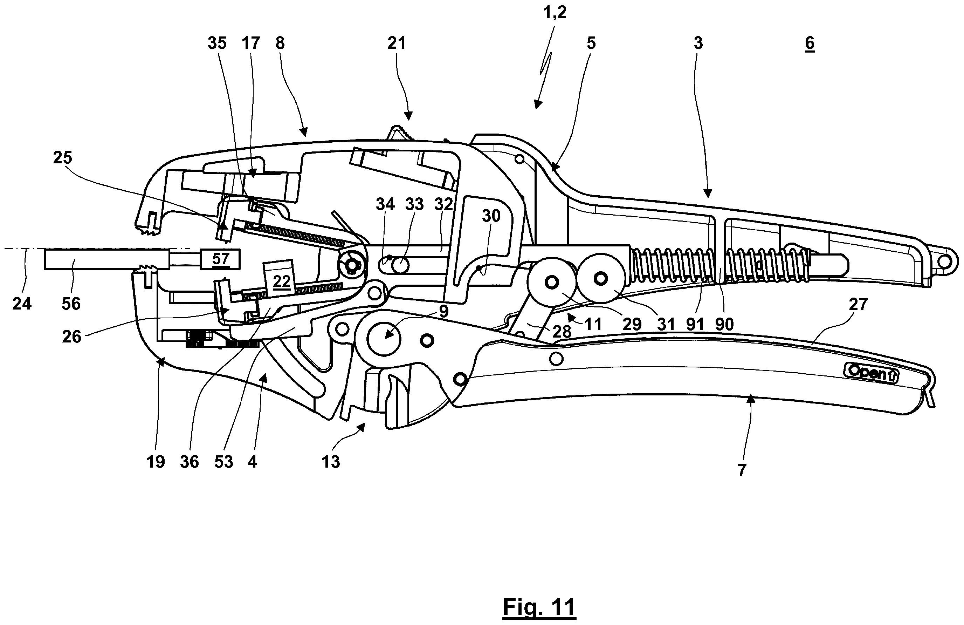

Gemäß **Fig. 1** ist die Abisolierzange 2 mit einem festen Handhebel 3 und einer festen Zangenbacke 4 gebildet, welche hier von einem einstückigen Gehäusekörper 5 ausgebildet sind. Gegenüber dem Gehäusekörper 5 sind verschwenkbar in einer Schwenkebene 6, welche der Zeichenebene gemäß **Fig. 3 bis 11** entspricht, ein beweglicher Handhebel 7 und eine bewegliche Zangenbacke 8 gelagert. Hierbei ist der bewegliche Handhebel in einem insbesondere in **Fig. 2** zu erkennenden Lager 9 gegenüber dem Gehäusekörper 5 gelagert, während die bewegliche Zangenbacke 8 in einem beabstandet von dem Lager 9 angeordneten Lager 10 gegenüber dem Gehäusekörper 5 gelagert ist. Die Schwenkbewegung des beweglichen Handhebels 7 ist lediglich über einen Schneidteilhub des Schließhubs der Handhebel 3, 7 gekoppelt mit der Schwenkbewegung der Zangenbacke 8, was durch eine Antriebskinematik 11 gewährleistet ist, welche im Folgenden noch näher erläutert wird. Im Außenbereich des Gehäusekörpers 5 verfügt dieser über eine in erster Näherung U-förmige Ausnehmung 12, im Bereich welcher eine Trenneinrichtung 13 angeordnet ist, welche dem vollständigen und glatten Durchtrennen eines Kabels, beispielsweise zur Vorbereitung des Kabel für einen Abisoliervorgang, dient. Die beiden Zangenbacken 4, 8 bilden in dem dem Lager 10 abgewandten Endbereich ein Zangenmaul 14 aus mit Klemmbacken 15a, 15b, zwischen welchen mit Schließung der Zangenbacken 4, 8 ein Kabel während des Abisoliervorganges gehalten werden kann. Des Weiteren ist in Fig. 1 ein aus der Zangenbacke 8 herausragendes Betätigungsorgan 16, hier ein quer zur Schwenkebene 6 orientierter Fortsatz, zu erkennen, über welchen die Betätigung einer Schneidtiefen-Verstelleinrichtung 17 möglich ist. Aus der Zangenbacke 4 kragt ein Betätigungsorgan 18, hier ein quer zur Schwenkebene 6 orientierter Fortsatz, heraus, über welchen eine Abziehteilhub-Verstelleinrichtung 19 betätigt werden kann. Ein weiteres Betätigungsorgan 20 ragt auf der Oberseite aus der Zangenbacke 8 heraus. Über das Betätigungsorgan 20 ist die Betätigung einer Sicherungseinrichtung 21 möglich, mittels welcher die Abisolierzange 2 in einer zumindest teilweise geschlossenen Stellung sicherbar ist. In Fig. 1 ist im Inneren des Zangenmauls 14 ein verschiebbarer Anschlag 22 zu erkennen, an dessen den Klemmbacken 15a, 15b zugewandter Stirnseite ein in das Zangenmaul eingeführtes Kabel mit seiner Stirnseite zur Anlage kommt, womit der Anschlag 22 vorgibt, wie weit das Kabel in das Zangenmaul 14 eingeführt werden kann. Der Anschlag 22 gibt damit auch vor, über welche Länge der isolierenden Ummantelung das Kabel abisoliert wird. Das Zangenmaul 14 bildet mit den Klemmbacken 15a, 15b und dem Anschlag 22 eine Aufnahme 23 für ein Kabel, wobei die Aufnahme 23 eine Längsachse 24 besitzt, entlang welcher sich ein etwaiges in der Aufnahme 23 gehaltene Kabel erstreckt. Beidseits der Längsachse 24 sind im Inneren des Zangenmauls 14 jeweils an den Zangenbacken 4, 8 Abisoliermesser 25, 26 auf im Folgenden noch näher erläuterte Weise gehalten und geführt.

Für das dargestellte Ausführungsbeispiel verfügt der Handhebel 7 über einen durch einen Deckel 27 geschlossenen Innenraum, in welchem ein Zubehör der Abisolierzange 2, insbesondere Klemmbacken 15a, 15b, Abisoliermesser 25, 26 und/oder Anschläge 22 gleicher oder unterschiedlicher Geometrie bevorratet sein können, wobei möglich ist, dass diese Zubehörteile an dem Deckel 27 gehalten sind. Hinsichtlich näherer Details und Abwandlungen einer derartigen Einrichtung zur Bevorratung von Zubehörteilen wird auf die diesbezügliche Offenbarung der nicht vorveröffentlichten europäischen Patentanmeldung EP 14 177 831.6 verwiesen, welche zum Gegenstand der vorliegenden Anmeldung gemacht wird.

Zur Bildung der Antriebskinematik 11 ist an dem Handhebel 7 verschwenkbar in der Schwenkebene 6 ein Druckhebel 28 angelenkt. Der Druckhebel 28 trägt in dem dem Handhebel 7 abgewandten Endbereich drehbar eine Rolle 29. Die Rolle 29 wälzt während des Schneidteilhubs an einer Führungsfläche 30 der Zangenbacke 8 ab (vgl. Fig. 3). Hierbei ist die Führungsfläche 30 in dem für den Schneidteilhub verantwortlichen Bereich beispielsweise viertelkreisförmig ausgebildet, während diese in einem anderen (vorzugsweise dem Abziehteilhub und/oder Leerteilhub zugeordneten) Teilbereich eben ausgebildet ist mit Orientierung entlang oder parallel zu der Längsachse 24. Zusätzlich steht die Rolle 29 in wälzendem Kontakt mit einer Rolle 31, welche drehbar gegenüber einer Zugstange 32 gelagert ist. Die Zugstange 32 ist parallel zur Längsachse 24 geführt, was mittels eines Führungsschlitzes einer Zwischenwand 90 des Handhebels 3 erfolgen kann. An der Zwischenwand 90 ist eine vorgespannte Feder 91 abgestützt, welche die Rolle 31 in Richtung der Rolle 29 beaufschlagt. Eine weitere Führung der Zugstange 32 erfolgt durch einen Lagerbolzen 33, welcher sich durch ein Langloch 34 der Zugstange 32 erstreckt. Die Breite des Langloches 34 entspricht (unter Ermöglichung der Gleitbewegung mit einer Gleitpassung) dem Durchmesser des Lagerbolzens 33. Der Lagerbolzen 33 ist multifunktional, da mit diesem auch das Lager 9 für die Zangenbacke 8 gebildet ist. Der Lagerbolzen 33 ist an dem Gehäusekörper 5 fixiert.

In dem dem Zangenmaul 14 zugewandten Endbereich sind an der Zugstange 32 zwei Messerhalter 35, 36 verschwenkbar um ein Lager 93 in der Schwenkebene 6 angelenkt, welche in grober Näherung V-förmig auf beiden Seiten der Längsachse 24 angeordnet sind und wobei eine Verschwenkung der Messerhalter 35, 36 um das Lager 93 zu einer Veränderung des Öffnungswinkel des V führt. In den der Zugstange 32 angewandten Endbereichen sind an den Messerhaltern 35, 36 die Abisoliermesser 25, 26 gehalten, wobei die Abisoliermesser 25, 26 mit einem Grundkörper 37 beispielsweise aus Plastik, welche die Verbindung mit den Messerhaltern 35, 36 ermöglicht, und den Abisoliermesserkörpern 38, welche aus Metall hergestellt sein können und die Schneiden ausbilden, gebildet sein können. Hinsichtlich der auswechselbaren Verbindung der Abisoliermesser 25, 26 mit den Messerhaltern 35, 36 wird auf die nicht vorveröffentlichte europäische Patentanmeldung EP 14 177 826.6 der Anmelderin verwiesen. Die Messerhalter 35, 36 und daran gehaltenen Abisoliermesser 25, 26 sind durch eine Feder 39, hier eine Schenkelfeder, nach außen beaufschlagt. Der Messerhalter 35 mit zugeordnetem Abisoliermesser 25 stützt sich unter Zwischenordnung der Schneidtiefen-Verstelleinrichtung 17 an der Zangenbacke 8 ab. Für das dargestellte Ausführungsbeispiel verfügt die Schneidtiefen-Verstelleinrichtung 17 über einen keilförmigen Verstellkörper 40. Wird der Verstellkörper 40 durch Betätigung des Betätigungsorgans 16 parallel zur Längsachse 24 relativ zu der Zangenbacke 8 und dem Messerhalter 35 und dem Abisoliermesser 25 verschoben, verändert sich der Winkel des mit dem Abisoliermesser 25 und dem Messerhalter 35 gebildeten Schenkels des V gegenüber der Längsachse 24, womit die Schneidtiefe am Ende des Schneidteilhubs verändert wird.

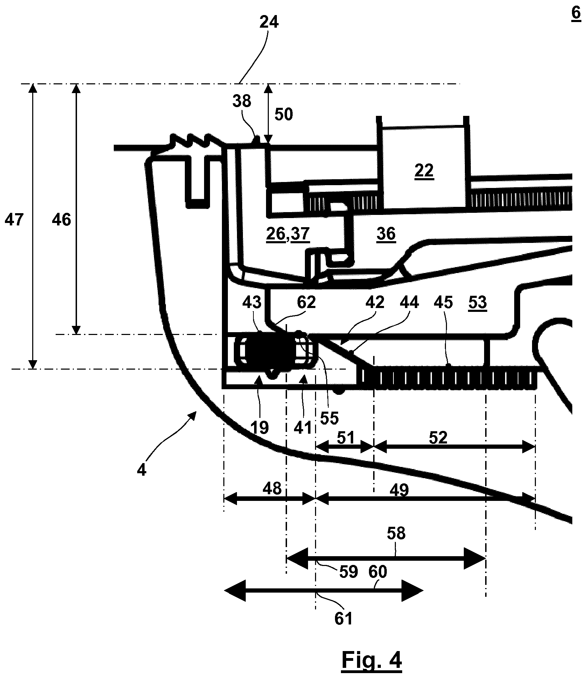

Der Messerhalter 36 und die Abisoliermesser 26 stützen sich auf der der Längsachse 24 angewandten Seite über die Abziehteilhub-Verstelleinrichtung 19 an der Zangenbacke 4 ab. Die Abziehteilhub-Verstelleinrichtung 19 verfügt über einen Führungskörper 41, der in größerem Detail in **Fig. 4** dargestellt ist. Der Führungskörper 41 bildet auf der dem Abisoliermesser 26 und dem Messerhalter 36 zugewandten Seite eine Führungsfläche 42 aus. Diese Führungsfläche 42 verfügt über hier jeweils eben ausgebildete Teilführungsflächen 43, 44, 45. Die hier ebene Teilführungsfläche 43 ist parallel zur Längsachse 24 orientiert und besitzt von dieser einen Abstand 46. Die an die Teilführungsfläche 43 in eine Richtung von den Klemmbacken 15 weg anschließende hier ebene Teilführungsfläche 44 ist nach außen abgeschrägt und geht mit einem Knick im Endbereich über in die hier ebene Teilführungsfläche 45, welche parallel zur Längsachse 24 orientiert ist und von dieser einen Abstand 47 besitzt, der größer ist als der Abstand 46 der Teilführungsfläche 43 von der Längsachse 24. Die Teilfläche 43 bildet einen Abziehteilhub-Führungsbereich 48. Erfolgt die Abstützung des Abisoliermessers 26 in dem Abziehteilhub-Führungsbereich 48 an der Teilführungsfläche 43, ändert sich der Abstand des Abisoliermessers 26 von der Längsachse 24 nicht. Die Teilführungsflächen 44, 45 bilden gemeinsam einen Leerteilhub-Führungsbereich 49. Während in dem Abziehteilhub-Führungsbereich 48 ein Abstand 50 des Abisoliermessers 26 von der Längsachse 24 konstant bleibt, vergrößert sich in dem ersten Teil-Leerteilhub-Führungsbereich 51, welcher von der Teilführungsfläche 44 bereitgestellt wird, der Abstand des Abisoliermessers 26 von der Längsachse 24, während der derart vergrößerte Abstand dann in einem zweiten Teil-Leerteilhub-Führungsbereich 52, der von der Teilführungsfläche 45 bereitgestellt wird, konstant bleibt. Möglich ist, dass das Abisoliermesser 26 und/oder der Messerhalter 36 auf der der Längsachse 24 abgewandten Seite unmittelbar an der Führungsfläche 42 des Führungskörpers 41 abgestützt ist/sind und entlang derselben gleitet/gleiten. Für das dargestellte Ausführungsbeispiel ist zwischen dem Abisoliermesser 26 und dem Messerhalter 36 einerseits und dem Führungskörper 41 andererseits ein Zwischenkörper 53 angeordnet, an dessen der Längsachse 24 zugewandten Seite das Abisoliermesser 26 und/oder der Messerhalter 36 abgestützt ist und an dessen der Längsachse 24 abgewandten Seite ein gleitender Kontakt mit der Führungsfläche 42 des Führungskörpers 41 besteht. Für das dargestellte Ausführungsbeispiel ist der Zwischenkörper 53 ebenfalls mit einem Lager 54 in dem dem Zangenmaul 14 zugewandten Endbereich der Zugstange 32 angelenkt. Demgemäß führt die translatorische Bewegung der Zugstange 32 zur gemeinsamen translatorischen Bewegung des Zwischenkörpers 53 einerseits und des Messerhalters 36 mit dem Abisoliermesser 26 andererseits, die mit einer gleitenden Bewegung der von dem Zwischenkörper 53 bereitgestellten Kontaktfläche 55 entlang der Führungsfläche 42 des Führungskörpers 41 einhergeht. Abweichend zu der zuvor erläuterten Ausführungsform ist aber ebenfalls möglich, dass lediglich die Teilführungsflächen 43, 44 von dem Führungskörper 41 ausgebildet werden, während die weitere Teilführungsfläche 45 von dem Gehäuse der festen Zangenbacke 4 bereitgestellt wird.

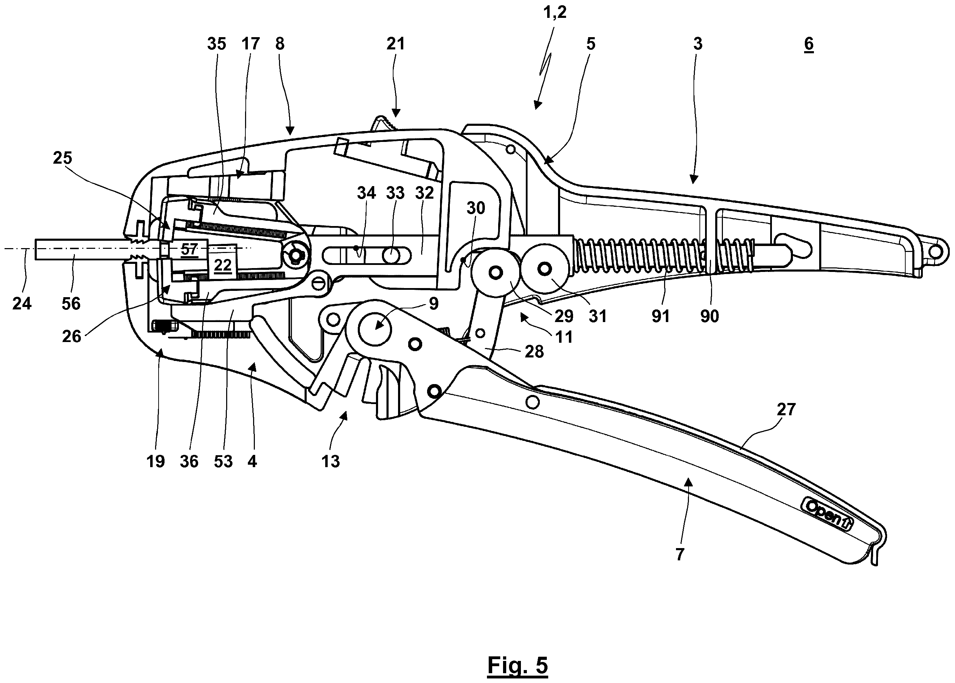

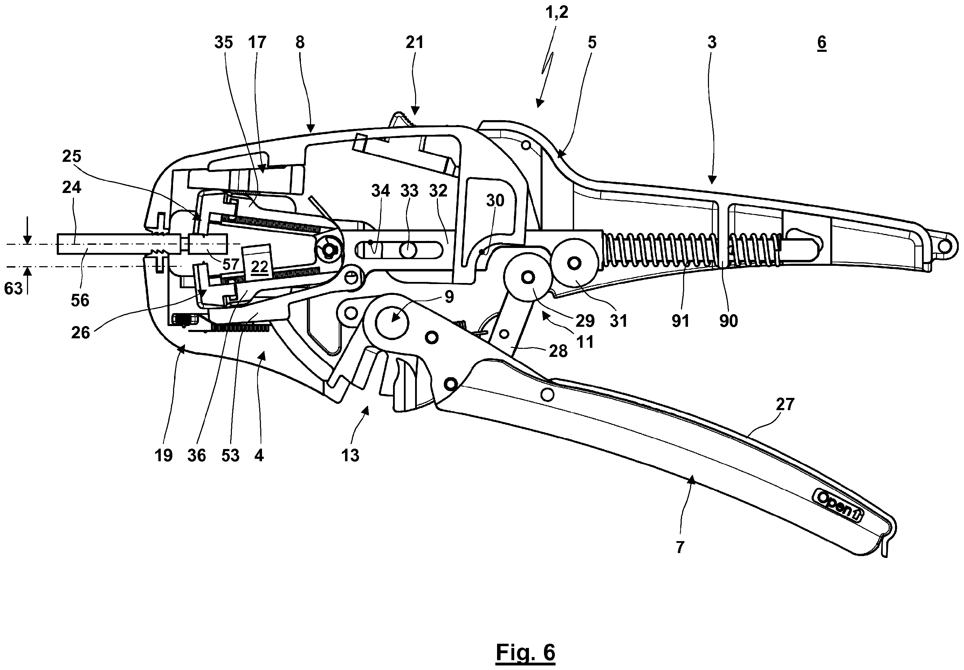

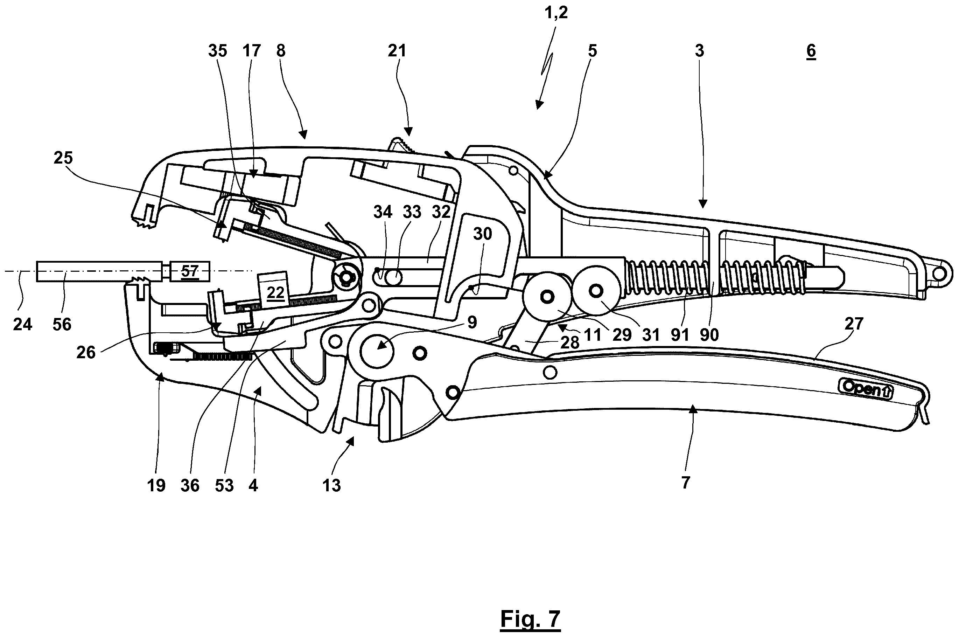

Die Funktionsweise der Abisolierzange 2 ist wie folgt:
a) Zunächst wird ein Kabel 56 in das Zangenmaul 14 eingeführt, bis dieses mit der Stirnseite zur Anlage an den Anschlag 22 kommt. Unter Umständen ist zuvor durch Verschiebung des Anschlags 22 und Verriegelung oder Rastierung desselben der Anschlag 22 in eine Position entlang der Längsachse 24 gebracht worden, welche mit der abzuisolierenden Länge korreliert.
b) Von der Öffnungsstellung der Handhebel 3, 7, welche mit dem geöffneten Zangenmaul 14 korreliert, werden dann in einem Schneidteilhub die Handhebel 3, 7 aufeinander zu verschwenkt. Die von dem Benutzer auf den Handhebel 7 aufgebrachte Handkraft wird über den Druckhebel 28 auf die Rolle 29 übertragen. Durch den Kontakt der Rolle 29 mit der Führungsfläche 30 der Zangenbacke 8 wird ein Schließmoment auf die Zangenbacke 8 ausgeübt, welche die Schließung des Zangenmauls 14 zur Folge hat. Mit der Schließung des Zangenmauls 14 werden die Klemmbacken 15a, 15b an die Mantelfläche des Kabels 56 angepresst, womit das Kabel in der Abisolierzange fixiert wird bei Ausrichtung der Längsachse des Kabels koaxial zu Längsachse 24. Mit der Schließung während des Schneidteilhubs kommen die Abisoliermesser 25, 26 auf gegenüberliegenden Seiten des Kabels 56 zur Anlage an die Ummantelung des Kabels 56. Infolge des auf die Zangenbacke 8 applizierten Schließmomentes schneiden die Abisoliermesser 25, 26 in die Mantelfläche des Kabels 56 ein, bis die in Fig. 3 dargestellte Stellung am Ende des Schneidteilhubs erreicht ist. Im Idealfall sind in diesem Fall die Abisoliermesser 25, 26 bis zu dem elektrischen Leiter durch die isolierende Ummantelung gedrungen, ohne den elektrischen Leiter zu beschädigen. Möglich ist, dass die Schneiden der Abisoliermesser 25, 26 beispielsweise halbkreisförmig gekrümmt sind mit einem Radius entsprechend dem Radius des elektrischen Leiters, so dass zwei sich ergänzende Halbumfangsschnitte erzeugt werden. Ist dieses nicht der Fall, kann lediglich ein Einschneiden eines Teilumfangs der Ummantelung des Kabels 56 erfolgen, womit dann in dem anschließenden Abziehteilhub ein Abreißen erfolgen muss. Die Abstimmung der Ausrichtung des Druckhebels 28 und des Kontakts der Rolle 29 mit der Führungsfläche 30 ist derart gewählt, dass während des Schneidteilhubs ausschließlich eine Bewegung der Zangenbacke 8 durch die Verschwenkung des Handhebels 7 hervorgerufen wird. Die von der an dem Druckhebel 28 gelagerten Rolle 29 auf die an der Zugstange 32 gelagerte Rolle 31 übertragene Betätigungskraft ist kleiner als die entgegengerichtet orientierte Vorspannkraft der Feder 91, welche auf die Zugstange 32 wirkt, so dass während des Schneidteilhubs die Betätigungskraft nicht ausreicht, um eine Bewegung der Zugstange 32 zu verursachen.
c) Mit dem Übergang von dem Schneidteilhub zu dem anschließenden Abziehteilhub führt die weitere Beaufschlagung des Handhebels 7 dazu, dass die vorgenannte Betätigungskraft größer wird als die Vorspannkraft der Feder 91, so dass eine Bewegung der Zugstange 32 einsetzt. Während des Abziehteilhubs sind die beiden Messerhalter 35, 36 mit daran gehaltenen Abisoliermessern 25, 26 derart zwischen dem Verstellkörper 40 und (hier unter Zwischenschaltung des Zwischenkörpers 53) und dem Führungskörper 41 gefangen, dass sich trotz der Gleitbewegung gegenüber dem Verstellkörper 40 und dem Führungskörper 41 der Abstand der beiden Abisoliermesser 25, 26 von der Längsachse 24 nicht verändert. Wie in Fig. 5 zu erkennen ist, wird in dem Abziehteilhub ein hülsenförmiger Teilbereich 57 von dem verbleibenden Rest der Ummantelung des Kabels 56 abgezogen, womit ein Teilbereich des elektrischen Leiters freigelegt wird. Während des Abziehteilhubs erfolgt die Führung des Abisoliermessers 26 in dem Abziehteilhub-Führungsbereich 48, welcher von der Teilführungsfläche 43 der Führungsfläche 42 des Führungskörpers 41 bereitgestellt wird.
d) Gelangt die Kontaktfläche 55 des Zwischenkörpers 53 zu dem Übergang von der Teilführungsfläche 43 zu der Teilführungsfläche 44, so beginnt der Leerteilhub. Für den Leerteilhub erfolgt die Abstützung des Abisoliermessers 26 (hier mittelbar über die Kontaktfläche 55 des Zwischenkörpers 53) zunächst in dem ersten Teil-Leerteilhub-Führungsbereich 51 an der Teilführungsfläche 44. Infolge des sich vergrößernden Abstandes von der Längsachse 24 wird infolge der Abschrägung der Teilführungsfläche 44 eine Bewegung des Abisoliermessers 26 nach außen ermöglicht, womit das Abisoliermesser 26 außer Eingriff mit dem Teilbereich 57 kommt. Infolge der Überlagerung dieser Öffnungsbewegung der Abisoliermesser 25, 26 mit gleichzeitiger durch die Zugstange 32 veranlasster Bewegung parallel zu der Längsachse 24 wird das Abisoliermesser 26 an dem Teilbereich 57 vorbeigeführt, so dass der Teilbereich 57 nicht weiter von dem elektrischen Leiter abgezogen wird. Am Ende des ersten Teil-Leerteilhub-Führungsbereichs 51 ist der maximale Abstand 63 des Abisoliermessers 26 von der Längsachse 24 erreicht. Während des zweiten Teil-Leerteilhub-Führungsbereichs 52 erfolgt dann die Abstützung des Abisoliermessers 26 (hier mittelbar über die Führungsfläche 55 des Zwischenkörpers 53) an der Teilführungsfläche 45. In diesem zweiten Teil-Leerteilhub-Führungsbereich 52 wird das Abisoliermesser 26 mit konstantem Abstand 63 von der Längsachse 24 und der Mantelfläche des Teilbereichs 57 bewegt (vgl. Fig. 6). Während des Leerteilhubs kommt darüber hinaus die Rolle 29 außer Kontakt mit der Führungsfläche 30, so dass die Beaufschlagung der Zangenbacke 8 mit einem Schließmoment entfällt kann. Infolge der Beaufschlagung der Zangenbacken 4, 8 mittels einer Feder in Öffnungsrichtung kann dann auch eine Öffnung der Zangenbacken 4, 8 erfolgen, so dass mit Abschluss des Schließhubs der Handhebel 3, 7, welcher sich aus dem Schneidteilhub, dem Abziehteilhub und dem Leerteilhub zusammensetzt, eine Öffnungsstellung des Zangenmauls gemäß Fig. 7 herbeigeführt sein kann. In dieser Öffnungsstellung ist die Entnahme des Kabels 56 mit teilweise abgezogenem Teilbereich 57 aus dem nun geöffneten Zangenmaul 14 möglich.
e) Mit Beseitigung der Betätigungskräfte von den Handhebeln 3, 7 kann mittels einer Öffnungsfeder die automatische Öffnung der Handhebel 3, 7 und einer Wiederherstellung der Ausgangsstellung erfolgen.

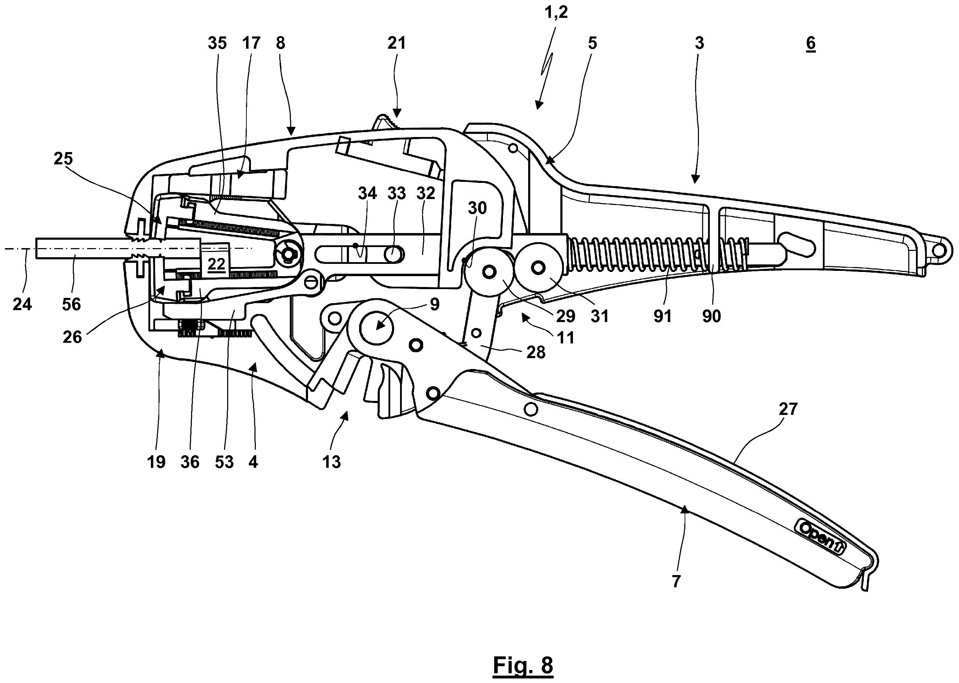

Der Führungskörper 41 ist verschiebbar in Richtung der Längsachse 24, aber fixierbar über eine Rast-, Klemm- oder Verriegelungseinrichtung 92, an der Zangenbacke 4 gehalten. Für die in den Fig. 3 bis 7 dargestellte Stellung der Abziehteilhub-Verstelleinrichtung 19 befindet sich der Führungskörper 41 in einer Stellung, für welchen der Abziehteilhub klein ist. In dem Detail in Fig. 4 ist relativ zu dem Führungskörper 41 mit einem Pfeil der Arbeitsbereich 58 des Führungskörpers 41 und der Führungsfläche 42 dargestellt, welcher für diese Stellung der Abziehteilhub-Verstelleinrichtung 19 beim Durchlaufen des Schließhubs genutzt wird. Hierbei befindet sich ein Übergang 59 zwischen dem Abziehteilhub und dem Leerteilhub am Anfang des Arbeitsbereichs 48, so dass der Abziehteilhub verhältnismäßig klein ist. Wird hingegen der Führungskörper 41 durch Verstellung der Abziehteilhub-Verstelleinrichtung 19 in Fig. 4 weiter nach rechts verschoben, ergibt sich ein Arbeitsbereich 60, für welchen eine größere Erstreckung der Teilführungsfläche 43 und eine kleinere Erstreckung der Teilführungsfläche 45 für die Führung genutzt wird und der Übergang 61 verlagert ist, so dass sich ein vergrößerter Abziehteilhub ergibt und ein in demselben Ausmaß verringerter Leerteilhub. In Fig. 8 bis 11 sind entsprechend die Verhältnisse dargestellt für einen vergrößerten Abziehteilhub durch Verstellung der Abziehteilhub-Verstelleinrichtung 19 mit Verschiebung des Führungskörpers 41 weiter vom Zangenmaul 14 weg und damit der Verstellung des Übergangs 59 zum Übergang 61.

Der Zwischenkörper 53 kann entfallen, ohne dass sich hierdurch grundsätzlich einen anderweitige Funktionsweise der Abziehteilhub-Verstelleinrichtung 19 ergeben würde. Für das dargestellte Ausführungsbeispiel ist der Zwischenkörper 53 vorgesehen, um ohne Notwendigkeit der Modifikation der Außenfläche des Messerhalters 36 und des Abisoliermessers 26 die Kontaktfläche 55 mit dem Führungskörper 41 derart zu verlagern, dass auch sehr kleine Abziehteilhübe möglich sind. Des Weiteren kann der Zwischenkörper 53 gezielt mit einer Kontaktschräge 62 versehen werden, deren Neigungswinkel dem Neigungswinkel der Teilführungsfläche 44 entspricht, um einen flächigen Kontakt zwischen der Kontaktschräge 62 und der Teilführungsfläche 44 zu gewährleisten.

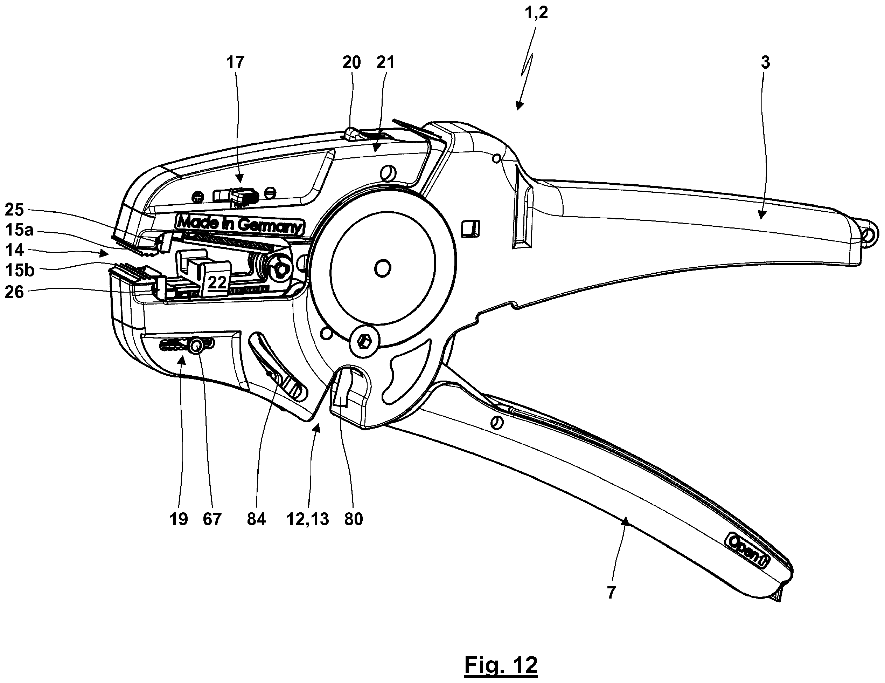

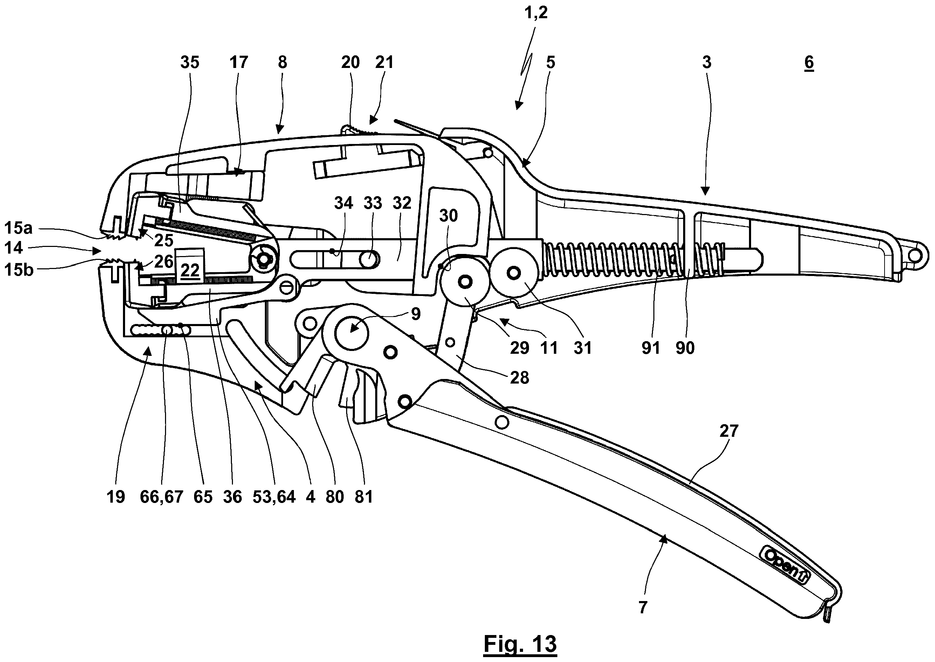

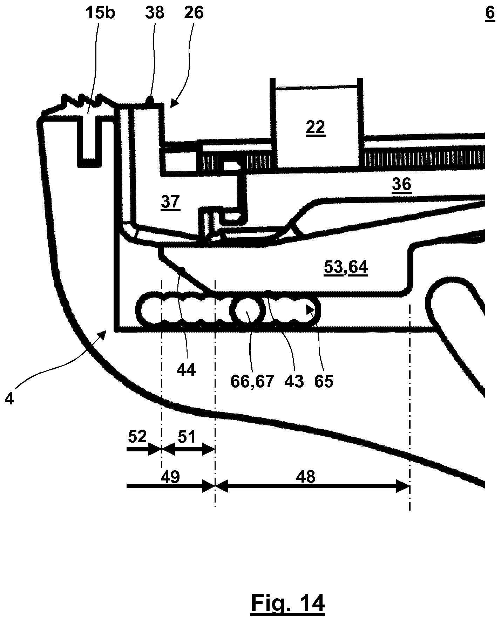

**Fig. 12 bis 14** zeigen eine weitere Ausführungsform einer Abisolierzange 2, welche grundsätzlich entsprechend der Abisolierzange gemäß den Fig. 1 bis 11 ausgebildet ist, aber eine andere Abziehteilhub-Verstelleinrichtung 19 aufweist: Während gemäß den Fig. 1 bis 11 die Führungsfläche 42 des Führungskörpers 41 nach innen in Richtung der Längsachse 24 orientiert ist, so dass sich das Abisoliermesser 26 nach außen an der Führungsfläche 42 abstützt, ist gemäß den Fig. 12 bis 14 der Führungskörper 64 von dem Zwischenkörper 53 ausgebildet, wobei in diesem Fall die Führungsfläche 65 nach außen, also von der Längsachse 24 weg weist. In diesem Fall stützt sich das Abisoliermesser 26 über den Führungskörper 64 mit der Führungsfläche 65 nach außen an einem Abstützkörper 66 ab, welcher hier als Abstützbolzen 67 ausgebildet ist. Während des Schließhubs ist der Abstützkörper 66 ortsfest an der Zangenbacke 4 gehalten, während zur Verstellung des Übergangs vom Abziehteilhub zum Leerteilhub der Abstützkörper 66 (zumindest mit einer Bewegungskomponente) parallel zur Längsachse 24 gegenüber der Zangenbacke 4 verschiebbar ist. Nach einer derartigen Einstellung des Abziehteilhubs wird der Abstützkörper 66 durch eine Rast-, Klemm- oder Verriegelungseinrichtung 92 verrastet, gesperrt oder verriegelt. Ohne dass dies zwingend der Fall ist, besitzt in diesem Fall die Führungsfläche 65 ausschließlich eine hier ebene, parallel zur Längsachse 24 orientierte Teilführungsfläche 43, welche dem Abziehteilhub-Führungsbereich 48 zugeordnet ist, sowie eine hier nach innen abgeschrägte und ebene Teilführungsfläche 44, mit welcher der Leerteilhub-Führungsbereich 49, nämlich ein erster Teil-Leerteilhub-Führungsbereich 51 gebildet ist. Sofern ein zweiter Teil-Leerteilhub-Führungsbereich 52 als Bestandteil des Leerteilhub-Führungsbereichs 49 erforderlich ist, kann für diesen der Abstützkörper 66 außer Kontakt mit dem von dem Zwischenkörper 53 gebildeten Führungskörper 64 kommen und beispielsweise die Anlage des Abstützkörpers 66 an den Grundkörper 37 erfolgen.

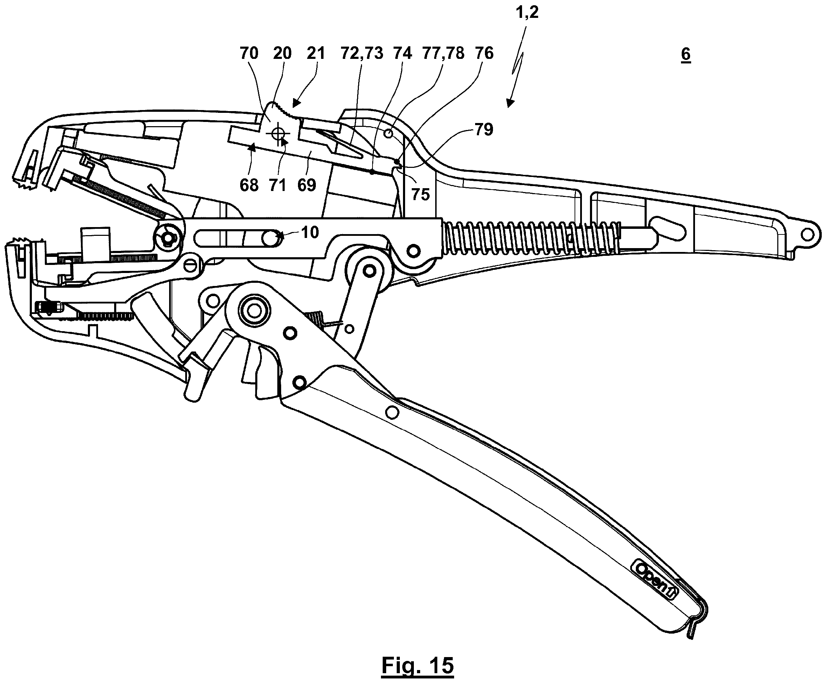

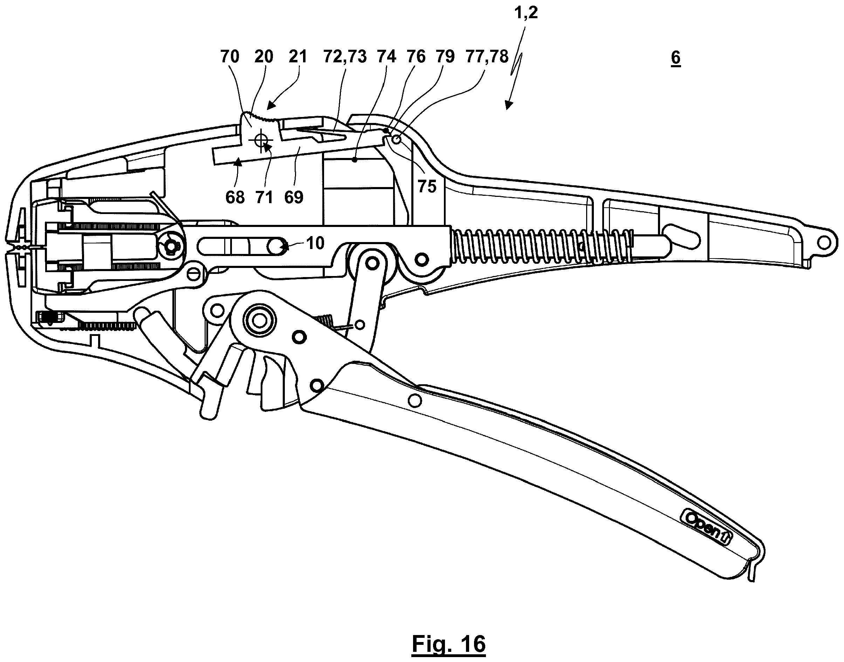

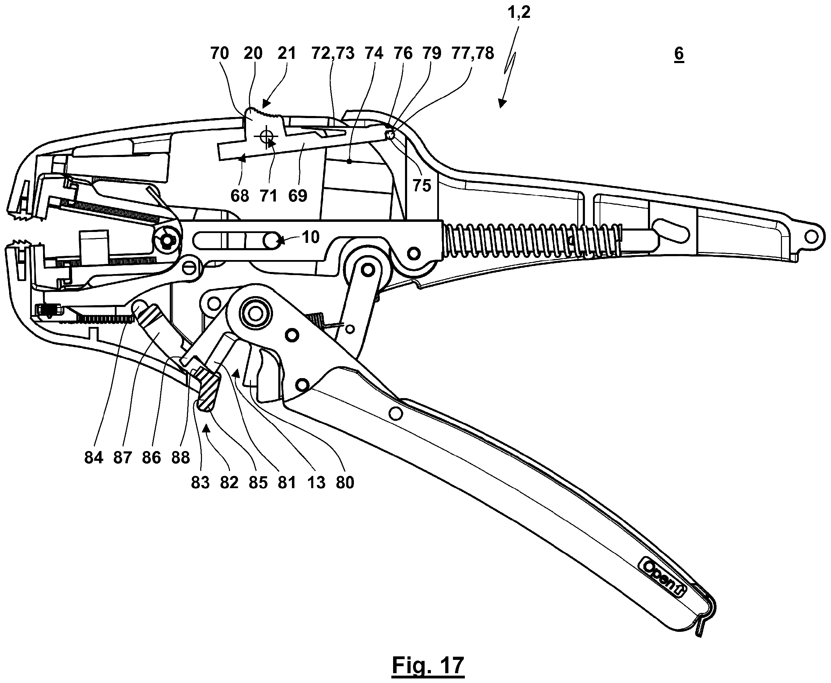

In den **Fig. 15 bis 17** ist die Funktionsweise der Sicherungseinrichtung 21, welche eine optionale Ausstattungsvariante der Abisolierzange 2 ist, dargestellt. Die Sicherungseinrichtung 21 ist hier mit einem Sicherungshebel 68 gebildet, welcher in großer Vereinfachung L-förmig gebildet ist mit senkrecht zueinander stehenden Schenkeln 69, 70 des L. Der Endbereich des Schenkels 70 bildet dabei das Betätigungsorgan 20 der Sicherungseinrichtung 21 aus. Im Verbindungsbereich der Schenkel 69, 70 ist ein Lager 71 angeordnet, im Bereich dessen der Sicherungshebel 68 verschwenkbar in der Schwenkebene 6 gegenüber der Zangenbacke 8 gelagert ist. Über eine Feder 72, welche hier als integraler Federarm 73 des Sicherungshebels 68 ausgebildet ist, ist der Sicherungshebel 68 in den Fig. 15 bis 17 in Richtung eines Anschlags 47, der von der Zangenbacke 8 ausgebildet ist, beaufschlagt. Der Federarm 73 kragt von dem Schenkel 69 des Sicherungshebels 68 aus und stützt mit seinem freien Endbereich an der Zangenbacke 8 ab. Der dem Lager 71 abgewandte Endbereich des Schenkels 69 verfügt auf der der Feder 72 abgewandten Seite über eine Hinterschneidung 75 sowie auf der gegenüberliegenden Seite über eine Abschrägung 76. Hierbei ist die ebene oder kurvenförmige Abschrägung 76 derart gestaltet, dass bei infolge der Beaufschlagung durch die Feder 72 an dem Anschlag 74 anliegendem Sicherungshebel 68 mit einer Verschwenkung der Zangenbacke 8 um das Lager 10 gegenüber dem Gehäusekörper 5 die Abschrägung 76 gerade an einem von dem Handhebel 3 getragenen Verriegelungskörper 77, insbesondere ein Verriegelungsstift, vorbeigeführt werden kann. Dies gilt sowohl für die Bewegung in Öffnungs- als auch in Schließrichtung, so dass ohne separate Betätigung des Betätigungsorgans 20 die Sicherungseinrichtung 21 nicht aktiviert wird. Ist hingegen die Aktivierung der Sicherungseinrichtung 21 gewünscht, erfolgt bei einer teilweisen Schließung der Handhebel 3, 7, für welche die zwischen Hinterschneidung und Abschrägung 76 gebildete Nase 79 gerade das Verriegelungselement 77 passiert hat, die Betätigung des Betätigungsorgans 20 derart, dass der Sicherungshebel 68 entgegen dem Uhrzeigersinn unter Beaufschlagung der Feder 72 von dem Benutzer betätigt wird. Infolge der geometrischen Verhältnisse, nämlich einerseits der Verschwenkung des Sicherungshebels 68 um das Lager 71 mit dem Radius des Abstands der Nase 79 von dem Lager 71 und andererseits der Verschwenkung der Zangenbacken 8 mit daran gehaltenem Verriegelungselement 77 um das Lager 10 mit dem Radius des Abstands des Verriegelungselements 77 von dem Lager 10, kommt mit einer dann erfolgenden Öffnungsbewegung der Handhebel 3, 7, welche durch eine Öffnungsfeder bei Entlastung der Handhebel 3, 7 hervorgerufen wird, die Hinterschneidung 75 zur Anlage an das Verriegelungselement 77. Hierbei wird das Verriegelungselement 77 infolge der genannten Öffnungsfeder gegen die Hinterschneidung 75 gepresst, womit die Beaufschlagung der Feder 72 aufrecht erhalten wird. Somit ist eine teilgeschlossene Stellung der Abisolierzange 2 gemäß Fig. 17 durch die Sicherungseinrichtung 21 gesichert. Bringt der Benutzer hieran anschließend wieder Betätigungskräfte in Schließrichtung auf die Handhebel 3, 7 auf, führt dies zur Verringerung der Kontaktkraft zwischen Verriegelungselement 77 und Hinterschneidung 75 des Sicherungshebels 68, so dass die Feder 72 den Sicherungshebel 68 wieder im Uhrzeigersinn verschwenken kann, bis dieser zur Anlage an dem Anschlag 74 kommt. In dieser Schließstellung kann aber die Nase 79 wieder an dem Verriegelungselement 77 vorbeigeführt werden, womit die Sicherungseinrichtung 21 deaktiviert ist und die Öffnungsbewegung der Sicherungseinrichtung 21 möglich ist.

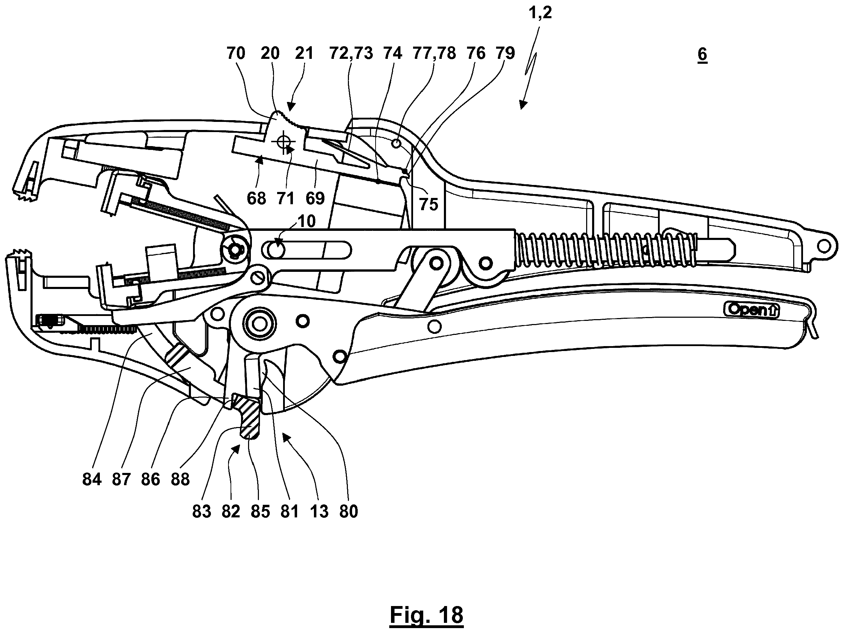

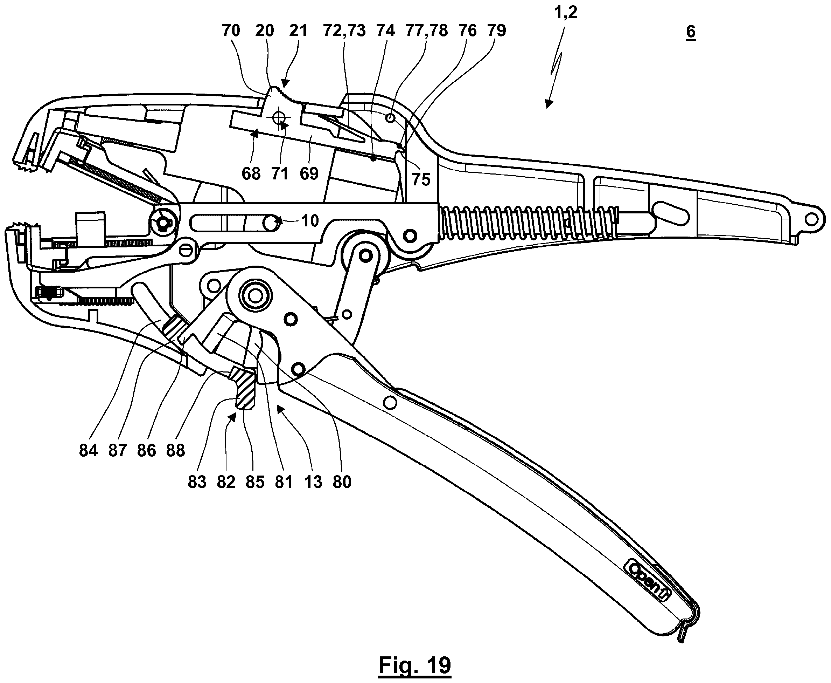

Optional kann die Abisolierzange 2 über eine Trenneinrichtung 13 verfügen. Diese ist gebildet mit einem ersten Trennmesser 80, welches starr an dem Gehäusekörper 5 gehalten ist und dessen Schneide radial zu dem Lager 9 für den Handhebel 7 orientiert ist. Ein weiteres Trennmesser 81 ist starr an dem Handhebel 7 gehalten. Für das dargestellte Ausführungsbeispiel erstreckt sich das Trennmesser 81 vertikal zur Längserstreckung des Handhebels 7. Hierbei ist auch die Schneide des Trennmessers 81 radial zu dem Lager 9 orientiert. In der Schließstellung der Handhebel 3, 7 kommen die Schneiden der Trennmesser 80, 81 aneinander zur Anlage, so dass in dieser Schließstellung ein in die Trenneinrichtung 13 eingeführtes Kabel vollständig durch die Trennmesser 80, 81 durchtrennt wird. Mittels einer Schutzeinrichtung 82 kann die Ausnehmung 12, in welcher die Trenneinrichtung 13 gebildet ist, nach außen geschlossen werden. Die Schutzeinrichtung 82 deckt somit nach außen die Trennmesser 80, 81 sowie deren Schneiden ab. Hierzu ist ein Deckel, Abdeck- oder Schutzkörper 83 bewegbar zwischen einer offenen Stellung und geschlossenen Stellung gegenüber dem Gehäusekörper 5 gelagert oder geführt. Für das dargestellte Ausführungsbeispiel erfolgt die Führung des Schutzkörpers 83 entlang einer Kurvenbahn, welche hier durch gekrümmte Nuten oder Schlitze 84 der Wandungen des Gehäusekörpers 5 vorgegeben ist, in welchen Querfortsätze des Schutzkörpers 83 geführt sind. Fig. 17 zeigt den Schutzkörper 83 in der Öffnungsstellung, während in Fig. 18 der Schutzkörper 83 in der Schließstellung ist. Möglich ist, dass der Wechsel der Schutzeinrichtung 82 von der Öffnungsstellung in die Schließstellung und umgekehrt von dem Benutzer durch manuelles Einwirken auf ein Betätigungsorgan 85 des Schutzkörpers erfolgt. Als optionale Besonderheit ist in den Fig. 17 bis 19 eine Ausgestaltung dargestellt, bei welcher mit dem Schließen der Handhebel 3, 7 der Schutzkörper 83 automatisch von der Öffnungsstellung gemäß Fig. 17 in die Schließstellung gemäß Fig. 18 überführt wird, wobei die Schließstellung beigehalten wird, wenn hieran anschließend die Öffnung der Handhebel 3, 7 erfolgt (Fig. 19). Hierzu verfügt der Handhebel 7 über einen Mitnehmer 86, welcher hier von einem Fortsatz des Trennmessers 81 ausgebildet ist. Der Mitnehmer 86 greift ein in einen Schlitz oder ein Langloch 87 des Schutzkörpers 83. Sind die Handhebel 3, 7 gemäß Fig. 17 geöffnet, kann zunächst manuell die Überführung des Schutzkörpers 83 von der Öffnungs- in die Schließstellung und umgekehrt erfolgen, für welche sich der Mitnehmer 86 in dem Langloch 87 bewegt. In geöffneter Stellung (Fig. 17) befindet sich der Mitnehmer 86 in einem kleinen Abstand von einer Begrenzung 88 des Langlochs 87. Erfolgt die Schließbewegung der Handhebel 3, 7 aus der Öffnungsstellung gemäß Fig. 17 in die Schließstellung gemäß Fig. 18, kommt der Mitnehmer 86 zur Anlage an die Begrenzung 88 des Langloches 87, so dass mit weiterer Schließung der Handhebel 3, 7 die Bewegung des Handhebels 7 über den Mitnehmer 86 und die Begrenzung 88 des Langloches 87 den Schutzkörper 83 mitnimmt bis in die Schließstellung (Fig. 18). Erfolgt danach die Wiederöffnung der Handhebel 3, 7, löst sich der Mitnehmer 68 von der Begrenzung 88 des Langloches 87 mit anschließender Bewegung des Mitnehmers 86 entlang des Langloches 87, womit die Kopplung zwischen Handhebel 7, Mitnehmer 86 und Schutzkörper 83 beseitigt wird. Somit kann der Handhebel 7 in Öffnungsrichtung bewegt werden, ohne dass hiermit gleichzeitig eine Öffnung der Schutzeinrichtung 82 erfolgt. Ist vielmehr die Nutzung der Trenneinrichtung 13 gewünscht, muss manuell über das Betätigungsorgan 85 der Schutzkörper 83 wieder in die Öffnungsstellung überführt werden. Für eine abgewandelte (hier nicht dargestellte) Ausführungsform ist der Schutzkörper 83 nicht mit einem Langloch 87 gebildet. Vielmehr verfügt in diesem Fall der Schutzkörper 83 über einen Fortsatz, welcher mit dem Mitnehmer 86 in Wechselwirkung tritt.

Die Erfindung umfasst Ausführungsformen, bei welchen an beiden Zangenbacken 4, 8 eine Abziehteilhub-Verstelleinrichtung 19 vorgesehen ist. Überraschend ist im Rahmen der Erfindung aber festgestellt worden, dass unter Umständen ausreichend ist, wenn die Abziehteilhub-Verstelleinrichtung 19 lediglich an einer Zangenbacke 4 vorgesehen ist.

Unter Umständen erfolgt während des Leerteilhubs eine geringfügige Verformung des Kabels 5, 6 von dem nicht über eine Abziehteilhub-Verstelleinrichtung 19 abgestützten Abisoliermesser 25 weg, so dass auch dieses Abisoliermesser 25 an den Teilbereich 57 vorbeigeführt wird. Dies kann u. U. unterstützt werden durch eine gewisse Neigung des Abisoliermessers 25 gegenüber der Querebene, womit der Kontakt der Stirnseite des Teilbereichs 57 mit dem Abisoliermesser 25 eine Kraftkomponente erzeugt, welche das Abisoliermesser 25 nach außen drückt.

Von dem Benutzer einstellbare Funktionseinrichtungen, insbesondere die Schneidtiefen-Verstelleinrichtung 17, die Abziehteilhub-Verstelleinrichtung 19 und/oder der Anschlag 22 sind über in diesem Technologiebereich übliche Rast-, Klemm- und/oder Sperreinrichtungen mit den benachbarten Bauelementen derart verbunden, dass einerseits eine Verstellung ggf. unter Nutzung der Betätigungsorgane 16, 18, möglich ist und andererseits bei den im Betrieb wirkenden Kräften eine Bewegung aus den über die Rast-, Klemm- und/oder Sperreinrichtung gesicherten Positionen nicht erfolgt. Um lediglich ein Beispiel zu nennen, kann der Führungskörper 41 der Abziehteilhub-Verstelleinrichtung 19 über Federarme verfügen, welche in einem Endbereich Rastnasen ausbilden, welche mit der Zangenbacke 4 rastiert oder verriegelt werden. Eine Veränderung der Stellung des Führungskörpers 41 kann durch Aufbringung hinreichender Kräfte in Einstellrichtung auf das Betätigungsorgan 20 mit Überwindung einer Rastverbindung durch ein "Überdrücken" erfolgen. Möglich ist aber auch, dass zunächst separate Entrastung oder Entriegelungskräfte auf ein Betätigungsorgan aufgebracht werden müssen, um dieses außer Eingriff mit einer Gegenrast- oder Gegenverriegelungs-Vertiefung zu bringen, bevor die Bewegung des Führungskörpers 41 in Einstellrichtung erfolgen kann. Für eine besondere Ausgestaltung der Erfindung verfügt der Führungskörper 41 über einen Federarm, vorzugsweise zwei Federarme, an welchen sowohl eine seitliche Rastnase als auch eine untere Rastnase vorgesehen ist/sind, welche jeweils, mit entsprechenden Rast- oder Verriegelungs-Vertiefungen der Zangenbacke 4 in Wechselwirkung treten. Hierbei können die seitliche Nase und die untere Nase unterschiedlichen Zwecken dienen. So kann beispielsweise eine der Nasen der Verriegelung dienen, deren Lösung eine separate Betätigung eines Betätigungsorgans erfordert, während die andere Nase eine in Einstellrichtung überdrückbare Rastierung bildet, die bevorzugte Stellungen der Abziehteilhub-Verstelleinrichtung 19 vorgibt.

Wie in den Figuren dargestellt ist, sind vorzugsweise die Abziehteilhub-Verstelleinrichtung 19 und die Schneidtiefen-Verstelleinrichtung 17 separat voneinander ausgebildet mit Betätigung derselben über separate Betätigungsorgane 18, 20. Durchaus möglich ist aber auch, dass eine Kopplung der Schneidtiefen-Verstelleinrichtung 17 mit der Abziehteilhub-Verstelleinrichtung 19 erfolgt, wobei die genannte Kopplung für die Einstellung einer Schneidtiefe gleichzeitig die Einstellung eines Abziehteilhubs (und umgekehrt) gewährleistet, so dass die Betätigung der Abziehteilhub-Verstelleinrichtung 19 und der Schneidtiefen-Verstelleinrichtung 17 auch über ein gemeinsames Betätigungsorgan erfolgen kann.

Sind die Abisoliermesser 25, 26 durch eine Bewegung transversal zu der Längsachse 24 von den Messerhaltern 35, 36 demontierbar und mit diesen montierbar, wie dieses insbesondere in der nicht vorveröffentlichten europäischen Patentanmeldung EP 14 177 826.6 beschrieben worden ist, kann der transversale Freiheitsgrad der Abisoliermesser 25, 26 durch die Wandung der Zangenbacke 4 blockiert sein. Möglich ist, dass die Wandung der Zangenbacke 4 mit einem Fenster oder einer Ausnehmung 89 ausgestattet ist, wie dies gestrichelt in Fig. 1 dargestellt ist. Gelangt für eine vorbestimmte Stellung das Abisoliermesser 25, 26 in den Bereich dieser Ausnehmung 89, so kann für diese vorbestimmte Betriebsstellung der Abisolierzange 2 die Entnahme des Abisoliermessers 26 in transversaler Richtung erfolgen. Allerdings wird unter Umständen auch die relative Lage des Abisoliermessers 26 zu der Ausnehmung 89 durch die Abziehteilhub-Verstelleinrichtung 19 beeinflusst: Erfolgt die Abstützung des Abisoliermessers 26 für Einstellung einen sehr kleinen Abziehteilhubs im Bereich des Leerteilhub-Führungsbereichs 49 des Führungskörpers 41, ist das Abisoliermesser 26 weiter im Inneren der Zangenbacke 4 angeordnet, so dass dieses trotz der Ausnehmung 89 nicht aus der Zangenbacke 4 in transversaler Richtung entnommen werden kann. Somit kann für die Entnahme und ein Auswechseln des Abisoliermessers 26 erforderlich sein, dass eine Einstellung der Abziehteilhub-Verstelleinrichtung 19 in einem vorgegebenen Bereich, vorzugsweise mit maximalem Abziehteilhub, erfolgt. Auf diese Weise kann die Betriebssicherheit der Abisolierzange 2 erhöht werden, da eine zusätzliche Sicherungsmaßnahme gegen eine unbeabsichtigte Beseitigung des Abisoliermessers 26 aus der Abisolierzange 2 bereitgestellt ist.

Für die Beeinflussung der Kraftverhältnisse an der Abisolierzange 2 und die Veranlassung einer automatischen Bewegung von Bauelementen können weitere, hier nicht beschriebene Federn in der Abisolierzange 2 vorhanden sein, von welchen nur einige in den Figuren dargestellt sind.

### BEZUGSZEICHENLISTE

- 1: Abisolierwerkzeug
- 2: Abisolierzange
- 3: fester Handhebel
- 4: feste Zangenbacke
- 5: Gehäusekörper
- 6: Schwenkebene
- 7: beweglicher Handhebel
- 8: bewegliche Zangenbacke
- 9: Lager beweglicher Handhebel
- 10: Lager bewegliche Zangenbacke
- 11: Antriebskinematik
- 12: Ausnehmung
- 13: Trenneinrichtung
- 14: Zangenmaul
- 15: Klemmbacken
- 16: Betätigungsorgan
- 17: Schneidtiefen-Verstelleinrichtung
- 18: Betätigungsorgan
- 19: Abziehteilhub-Verstelleinrichtung
- 20: Betätigungsorgan
- 21: Sicherungseinrichtung
- 22: Anschlag
- 23: Aufnahme
- 24: Längsachse
- 25: Abisoliermesser
- 26: Abisoliermesser
- 27: Deckel
- 28: Druckhebel
- 29: Rolle
- 30: Führungsfläche
- 31: Rolle
- 32: Zugstange
- 33: Lagerbolzen
- 34: Langloch
- 35: Messerhalter
- 36: Messerhalter
- 37: Grundkörper
- 38: Abisoliermesserkörper
- 39: Feder
- 40: Verstellkörper
- 41: Führungskörper
- 42: Führungsfläche
- 43: Teilführungsfläche
- 44: Teilführungsfläche
- 45: Teilführungsfläche
- 46: Abstand
- 47: Abstand
- 48: Abziehteilhub-Führungsbereich
- 49: Leerteilhub-Führungsbereich
- 50: Abstand
- 51: erster Teil-Leerteilhub-Führungsbereich
- 52: zweiter Teil-Leerteilhub-Führungsbereich
- 53: Zwischenkörper
- 54: Lager
- 55: Kontaktfläche
- 56: Kabel
- 57: Teilbereich
- 58: Arbeitsbereich
- 59: Übergang
- 60: Arbeitsbereich
- 61: Übergang
- 62: Kontaktschräge
- 63: zweiter Absatz
- 64: Führungskörper
- 65: Führungsfläche
- 66: Abstützkörper
- 67: Abstützbolzen
- 68: Sicherungshebel
- 69: Schenkel
- 70: Schenkel
- 71: Lager
- 72: Feder
- 73: Federarm
- 74: Anschlag
- 75: Hinterschneidung
- 76: Abschrägung
- 77: Verriegelungselement
- 78: Verriegelungsstift
- 79: Nase
- 80: Trennmesser
- 81: Trennmesser
- 82: Schutzeinrichtung
- 83: Schutzkörper
- 84: Schlitz
- 85: Betätigungsorgan
- 86: Mitnehmer
- 87: Langloch
- 88: Begrenzung
- 89: Ausnehmung
- 90: Zwischenwand
- 91: Feder
- 92: Rast-, Klemm- oder Verriegelungseinrichtung
- 93: Lager

## Patentansprüche

1. Abisolierwerkzeug (1), dessen Schließhub
a) einen Schneidteilhub besitzt, für welchen eine Schließbewegung mindestens eines Abisoliermessers (25, 26) quer zu einer Längsachse (24) einer Aufnahme (23) für ein abzuisolierendes Kabel (56) in eine Schließstellung erfolgt,
b) einen Abziehteilhub besitzt, für welchen das mindestens eine Abisoliermesser (25, 26) in der Schließstellung parallel zu der Längsachse (24) der Aufnahme (23) für das abzuisolierende Kabel (56) bewegt wird,
**dadurch gekennzeichnet, dass**
c) der Schließhub einen auf den Abziehteilhub folgenden Leerteilhub besitzt, für welchen das mindestens eine Abisoliermesser (25, 26) in einer Öffnungsstellung zumindest mit einer Bewegungskomponente, die parallel zu der Längsachse (24) der Aufnahme (23) für das abzuisolierende Kabel (56) orientiert ist, bewegt wird,
d) wobei ein Übergang (59, 61) vom Abziehteilhub zum Leerteilhub einstellbar ist.

2. Abisolierwerkzeug (1) nach Anspruch 1, **dadurch gekennzeichnet, dass**
a) in die Aufnahme (23) ein abzuisolierendes Kabel (56) mit Erstreckung in Richtung einer Längsachse (24) der Aufnahme (23) eingelegt werden kann,
b) das Abisoliermesser (26) über eine Führung geführt ist,
c) die Führung des Abisoliermessers (26)
ca) einen Abziehteilhub-Führungsbereich (48) besitzt, im Bereich dessen das Abisoliermesser (26) parallel zu der Längsachse (23) der Aufnahme (24) für ein abzuisolierendes Kabel (56) mit einem ersten Abstand (50) von der Längsachse (24) geführt ist, und
cb) einen Leerteilhub-Führungsbereich (49) besitzt, im Bereich dessen das Abisoliermesser (26) zumindest mit einer Bewegungskomponente, die parallel zu der Längsachse (24) der Aufnahme (23) für das abzuisolierende Kabel (56) orientiert ist, mit einem zweiten Abstand (63) von der Längsachse (24) geführt ist, der größer ist als der erste Abstand (50), und
d) der Übergang (59, 61) vom Abziehteilhub-Führungsbereich (48) zum Leerteilhub-Führungsbereich (49) einstellbar ist.

3. Abisolierwerkzeug (1) nach Anspruch 2, **dadurch gekennzeichnet, dass** die Führung mit einem Führungskörper (41; 64) gebildet ist,
a) an dem das Abisoliermesser (26) quer zur Längsachse (24) der Aufnahme (23) abgestützt ist und
b) welcher eine Führungsfläche (42; 65) aufweist, die
ba) im Abziehteilhub-Führungsbereich (48) mit einer ebenen Teilführungsfläche (43) ausgebildet ist,
bb) und im Leerteilhub-Führungsbereich (49)
- mit einer abgeschrägten Teilführungsfläche (44) und/oder
- mit einer Teilführungsfläche (45), deren Abstand von der Längsachse (24) der Aufnahme (23) anders ist als der Abstand der ebenen Teilführungsfläche (43) im Abziehteilhub-Führungsbereich (48),
ausgebildet ist.

4. Abisolierwerkzeug (1) nach Anspruch 3, **dadurch gekennzeichnet, dass**
a) der Führungskörper (41) während des Schließhubs ortsfest an einer zugeordneten Werkzeugbacke (Zangenbacke 4) gehalten ist,
b) das Abisoliermesser (26) rollend oder gleitend nach außen an der Führungsfläche (42) des Führungskörpers (41) abgestützt ist und
c) der Führungskörper (41) zur Einstellung des Übergangs (59, 61) vom Abziehteilhub-Führungsbereich (48) zum Leerteilhub-Führungsbereich (49) gegenüber der Werkzeugbacke (Zangenbacke 4) parallel zur Längsachse (24) der Aufnahme (23) verschiebbar ist.

5. Abisolierwerkzeug (1) nach Anspruch 3, **dadurch gekennzeichnet, dass**
a) der Führungskörper (64) während des Schließhubs relativ zu der zugeordneten Werkzeugbacke (Zangenbacke 4) bewegt wird und
b) die rollende oder gleitende Abstützung des Führungskörpers (64) mit der Führungsfläche (65) an einem während des Schließhubs ortsfest an der zugeordneten Werkzeugbacke (Zangenbacke 4) gehaltenen Abstützkörper (66) erfolgt,
c) wobei zur Einstellung des Übergangs vom Abziehteilhub-Führungsbereich (48) zum Leerteilhub-Führungsbereich (49) der Abstützkörper (66) gegenüber der Werkzeugbacke (Zangenbacke 4) parallel zur Längsachse (24) der Aufnahme (23) verschiebbar ist.

6. Abisolierwerkzeug (1) nach Anspruch 4 oder 5, **dadurch gekennzeichnet, dass** unterschiedliche Stellungen des Führungskörpers (41) oder des Abstützkörpers (66) über eine Rast-, Klemm- oder Verriegelungseinrichtung (92) gesichert sind.

7. Abisolierwerkzeug (1) nach Anspruch 4 oder Anspruch 6 in Rückbeziehung auf Anspruch 4, **dadurch gekennzeichnet, dass** zwischen dem Abisoliermesser (26) und dem Führungskörper (41) ein Zwischenkörper (53) angeordnet ist, welcher von einem Antrieb des Abisolierwerkzeugs (1) gemeinsam mit dem Abisoliermesser (26) bewegt wird und welcher einer Kontaktfläche (55) ausbildet, welche sich gleitend entlang der Führungsfläche (42) des Führungskörpers (41) bewegt.

8. Abisolierwerkzeug (1) nach einem der vorhergehenden Ansprüche, **dadurch gekennzeichnet, dass** das Abisoliermesser (26), ein das Abisoliermesser haltender Messerhalter (36), der Zwischenkörper (53) und/oder der Führungskörper (41) mit einer Zugstange (32) gekoppelt ist/sind, wobei die Zugstange (32) mit dem Durchlaufen des Schließhubs parallel zur Längsachse (24) der Aufnahme (23) des Abisolierwerkzeugs (1) bewegt wird.

9. Abisolierwerkzeug (1) nach Anspruch 8, **dadurch gekennzeichnet, dass** die Zugstange (32)
a) während des Schneidteilhubs nicht bewegt wird und
b) sowohl während des Abziehteilhubs als auch während des Leerteilhubs parallel zur Längsachse (24) bewegt wird.

10. Abisolierwerkzeug (1) nach Anspruch 8 oder 9, **dadurch gekennzeichnet, dass** die Betätigung der Zugstange (32) über einen in einem Endbereich an einem beweglichen Handhebel (7) angelenkten Druckhebel (28) erfolgt, welcher in dem anderen Endbereich während des Schließhubs rollend oder gleitend an einer Führungsfläche (30) einer beweglichen Werkzeugbacke (Zangenbacke 8) abgestützt ist sowie rollend oder gleitend an der Zugstange (32) abgestützt ist, wobei die Aufteilung der Kraft in dem Druckhebel (28) auf die Führungsfläche (30) der beweglichen Werkzeugbacke (Zangenbacke 8) einerseits und auf die Zugstange (32) andererseits von der Neigung der Führungsfläche (30) und dem Winkel des Druckhebels (28) abhängig ist.

11. Abisolierwerkzeug (1) nach einem der vorhergehenden Ansprüche, **dadurch gekennzeichnet, dass** eine Sicherungseinrichtung (21) vorhanden ist, mittels welcher das Abisolierwerkzeug (1) in einer zumindest teilweise geschlossenen Stellung sicherbar ist.

12. Abisolierwerkzeug (1) nach Anspruch 11, **dadurch gekennzeichnet, dass** die Sicherungseinrichtung (21) durch Betätigung des Antriebs des Abisolierwerkzeugs (1) automatisch gelöst wird.

13. Abisolierwerkzeug (1) nach einem der vorhergehenden Ansprüche, **dadurch gekennzeichnet, dass** eine Trenneinrichtung (13) zum Durchtrennen eines Kabels (56) vorhanden ist, wobei die Trenneinrichtung (56) mit einer Schutzeinrichtung (82) verschließbar ist.

14. Abisolierwerkzeug (1) nach Anspruch 13, **dadurch gekennzeichnet, dass** die Schutzeinrichtung (82) automatisch mit dem Durchlaufen des Schließhubs in eine Schutzstellung überführt wird, in welcher diese auch mit Umkehrung des Schließhubs verbleibt.

15. Abisolierwerkzeug (1) nach einem der vorhergehenden Ansprüche, **dadurch gekennzeichnet, dass** eine Schneidtiefen-Verstelleinrichtung (17) vorhanden ist, über welche der Abstand mindestens eines Abisoliermessers (25) quer zu der Längsachse (24) der Aufnahme am Ende des Schneidteilhubs verstellbar ist.

16. Abisolierwerkzeug (1) nach Anspruch 15, **dadurch gekennzeichnet, dass** die Schneidtiefen-Verstelleinrichtung (17) einerseits und die Führung des Abisoliermessers (26) mit dem Abziehteilhub-Führungsbereich (48) und dem Leerteilhub-Führungsbereich (49) andererseits unterschiedlichen Werkzeugbacken (Zangenbacke 8; Zangenbacke 4) zugeordnet sind.

17. Abisolierwerkzeug (1) nach einem der vorhergehenden Ansprüche, **dadurch gekennzeichnet, dass** der Schließhub einen auf den Leerteilhub folgenden Öffnungsteilhub aufweist.

18. Abisolierwerkzeug (1) nach einem der vorhergehenden Ansprüche, **dadurch gekennzeichnet, dass** die Abisoliermesser (25, 26) auswechselbar sind, wobei ein Auswechseln der Abisoliermesser (25, 26) nur möglich ist, wenn der eingestellte Übergang (59; 61) vom Abziehteilhub zum Leerteilhub
a) einem vorgegebenen Übergang entspricht oder
b) in einem vorgegebenen Übergangsbereich liegt.

## Claims

1. Stripping tool (1) having a closing stroke which
a) comprises a cutting stroke part during which a closing movement of at least one stripping blade (25, 26) in a direction transverse to a longitudinal axis (24) of an accommodation (23) for a cable (56) which is to be stripped into a closed position is provided,
b) comprises a stripping stroke part during which the at least one stripping blade (25, 26) is moved in the closed position parallel to the longitudinal axis (24) of the accommodation (23) for the cable (56) which is to be stripped,
**characterised in that**
c) the closing stroke comprises an empty stroke part which follows to the stripping stroke part and during which the at least one stripping blade (25, 26) is moved in an open position at least with a component of the movement having an orientation parallel to the longitudinal axis (24) of the accommodation (23) for the cable (56) which is to be stripped,
d) a transition (59, 61) from the stripping stroke part to the empty stroke part is adjustable.

2. Stripping tool (1) of claim 1, **characterised in that**
a) it is possible to insert a cable (56) which is to be stripped with an extension along a longitudinal axis (24) of the accommodation (23)into the accommodation (23),
b) the stripping blade (26) is guided by a guidance,
c) the guidance of the stripping blade (26)
ca) comprises a stripping stroke part guiding region (48) in the region of which the stripping blade (26) is guided parallel to the longitudinal axis (23) of the accommodation (24) for a cable (56) which is to be stripped with a first distance (50) from the longitudinal axis (24) and
cb) comprises an empty stroke part guiding region (49) in the region of which the stripping blade (26) is guided at least with a component of the movement having an orientation parallel to the longitudinal axis (24) of the accommodation (23) for the cable (56) which is to be stripped with a second distance (63) from the longitudinal axis (24) which is larger than the first distance (50) and
d) the transition (59, 61) from the stripping stroke part guiding region (48) to the empty stroke part guiding region (49) is adjustable.

3. Stripping tool (1) of claim 2, **characterised in that** the guidance comprises a guiding body (41; 64)
a) at which the stripping blade (26) is supported in a direction transverse to the longitudinal axis (24) of the accommodation (23) and
b) which comprises a guiding surface (42; 65) which
ba) comprises a planar guiding surface part (43) in the stripping stroke part guiding region (48),
bb) and in the empty stroke part guiding region (49)
- comprises a bevel guiding surface part (44) and/or
- comprises a guiding surface part (45) having a distance from the longitudinal axis (24) of the accommodation (23) differing from the distance of the planar guiding surface part (43) in the stripping stroke part guiding region (48).

4. Stripping tool (1) of claim 3, **characterised in that**
a) during the closing stroke the guiding body (41) is held at a fixed position at an associated tool jaw (pliers jaw 4),
b) the stripping blade (26) is supported in outer direction for rolling or sliding at the guiding surface (42) of the guiding body (41) and
c) for adjusting the transition (59, 61) from the stripping stroke part guiding region (48) to the empty stroke part guiding region (49) the guiding body (41) is displaceable relative to the tool jaw (pliers jaw 4) in a direction parallel to the longitudinal axis (24) of the accommodation (23).

5. Stripping tool (1) of claim 3, **characterised in that**
a) the guiding body (64) is moved relative to the associated tool jaw (pliers jaw 4) over the closing stroke and
b) the rolling or sliding support of the guiding body (64) with the guiding surface (65) is provided by a supporting body (66) which is held with a fixed position over the closing stroke at the associated tool jaw (pliers jaw 4),
c) for adjusting the transition from the stripping stroke part guiding region (48) to the empty stroke part guiding region (49) the supporting body (66) is displaceable relative to the tool jaw (pliers jaw 4) in a direction parallel to the longitudinal axis (24) of the accommodation (23).

6. Stripping tool (1) of claim 4 or 5, **characterised in that** different positions of the guiding body (41) or of the supporting body (66) are secured by a latching, clamping or locking device (92).

7. Stripping tool (1) of claim 4 or of claim 6 when referring back to claim 4, **characterised in that** an intermediate body (53) is arranged between the stripping blade (26) and the guiding body (41), the intermediate body (53) being moved together with the stripping blade (26)by a drive of the stripping tool (1) and the intermediate body (53) forming a contact surface (55) which is moved with a sliding movement along the guiding surface (42) of the guiding body (41).

8. Stripping tool (1) of one of the preceding claims, **characterised in that** the stripping blade (26), a blade holder (36) holding the stripping blade, the intermediate body (53) and/or the guiding body (41) are/is coupled to a pulling rod (32), the pulling rod (32) being moved parallel to the longitudinal axis (24) of the accommodation (23) of the stripping tool (1) when running through the closing stroke.

9. Stripping tool (1) of claim 8, **characterised in that** the pulling rod (32)
a) is not moved during the cutting stroke part and
b) is moved parallel to the longitudinal axis (24)both during the stripping stroke part as well as during the empty stroke part.

10. Stripping tool (1) of claim 8 or 9, **characterised in that** the actuation of the pulling rod (32) is provided by use of a pressure lever (28) linked in one end region to a moveable hand lever (7), the other end region of the pressure lever (28) being supported for rolling or sliding along a guiding surface (30) of a moveable tool jaw (pliers jaw 8) during the closing stroke as well as supported for rolling or sliding by the pulling rod (32), the splitting of the force in the pressure lever (28) on the one hand to the guiding surface (30) of the moveable tool jaw (pliers jaw 8) and on the other hand to the pulling rod (32) depending on the inclination of the guiding surface (30) and on the angle of the pressure lever (28).

11. Stripping tool (1) of one of the preceding claims, **characterised in that** a securing device (21) is provided by which it is possible to secure the stripping tool (1) in an at least partially closed position.

12. Stripping tool (1) of claim 11, **characterised in that** the securing device (21) is automatically released by an actuation of the drive of the stripping tool (1).

13. Stripping tool (1) of one of the preceding claims, **characterised in that** a severing device (13) for severing the cable (56) is provided, said severing device (56) being closable by a protecting device (82).

14. Stripping tool (1) of claim 13, **characterised in that** when running through the closing stroke the protecting device (82) is automatically transferred into a protecting position in which the protecting device (82) also remains when reversing the closing stroke.

15. Stripping tool (1) of one of the preceding claims, **characterised in that** a cutting depth adjusting device (17) is provided by which it is possible to adjust the distance of at least one stripping blade (25) in a direction transverse to the longitudinal axis (24) of the accommodation at the end of the cutting stroke part.

16. Stripping tool (1) of claim 15, **characterised in that** on the one hand the cutting depth adjusting device (17) and on the other hand the guidance of the stripping blade (26) comprising the stripping stroke part guiding region (48) and the empty stroke part guiding region (49) are associated to different tool jaws (pliers jaw 8; pliers jaw 4).

17. Stripping tool (1) of one of the preceding claims, **characterised in that** the closing stroke comprises an opening stroke part following to the empty stroke part.

18. Stripping tool (1) of one of the preceding claims, **characterised in that** the stripping blades (25, 26) are exchangeable and an exchange of the stripping blades (25, 26) is only possible if the adjusted transition (59; 61) from the stripping stroke part to the empty stroke part
a) corresponds to a predefined transition or
b) is within a predefined transition region.

## Revendications

1. Pince à dénuder (1) dont la course de fermeture
a) possède une course partielle de coupe pour laquelle un mouvement de fermeture d'au moins une lame à dénuder (25, 26) a lieu transversalement par rapport à un axe longitudinal (24) d'un logement (23) pour un câble à dénuder (56) vers une position de fermeture,
b) possède une course partielle d'extraction pour laquelle l'au moins une lame à dénuder (25, 26) est déplacé dans la position de fermeture parallèlement à l'axe longitudinal (24) du logement (23) pour le câble à dénuder (56),
**caractérisée en ce que**
c) la course de fermeture possède une course partielle à vide suivant la course partielle d'extraction, pour laquelle l'au moins une lame à dénuder (25, 26) est déplacée dans une position d'ouverture au moins avec une composante de mouvement qui est orientée parallèlement à l'axe longitudinal (24) du logement (23) pour le câble à dénuder (56),
d) une transition (59, 61) de la course partielle d'extraction à la course partielle à vide étant réglable.

2. Outil à dénuder (1) selon la revendication 1, **caractérisé en ce que**
a) dans le logement (23), il est possible d'insérer un câble à dénuder (56) avec une extension en direction d'un axe longitudinal (24) du logement (23),
b) la lame à dénuder (26) est guidée par l'intermédiaire d'un guidage,
c) le guidage de la lame à dénuder (26)
ca) possède une zone de guidage de course partielle d'extraction (48), au niveau de laquelle la lame à dénuder (26) est guidée parallèlement à l'axe longitudinal (23) du logement (24) pour un câble à dénuder (56) avec une première distance (50) par rapport à l'axe longitudinal (24) et
cb) possède une zone de guidage de course partielle à vide (49) au niveau de laquelle la lame à dénuder (26) est guidée, au moins avec une composante de mouvement, qui est orientée parallèlement à l'axe longitudinal (24) du logement (23) pour le câble à dénuder (56), avec une deuxième distance (63) par rapport à l'axe longitudinal (24), qui est supérieur à la première distance (50) et
d) la transition (59, 61) de la zone de guidage de course partielle d'extraction (48) à la zone de guidage de course partielle à vide (49) est réglable.

3. Outil à dénuder (1) selon la revendication 2, **caractérisé en ce que** le guidage est constitué d'un corps de guidage (41 ; 64),
a) contre lequel la lame à dénuder (26) est appuyée transversalement par rapport à l'axe longitudinal (24) du logement (23) et
b) qui comprend une surface de guidage (42 ; 65) qui
ba) est réalisée, dans la zone de guidage de course partielle d'extraction (48), avec une surface de guidage partielle (43),
bb) et dans la zone de guidage de course partielle à vide (49)
- avec une surface de guidage partielle biseautée (44) et/ou
- avec une surface de guidage partielle (45) dont la distance par rapport à l'axe longitudinal (24) du logement (23) est différente de la distance de la surface de guidage partielle plane (43) dans la zone de guidage de course partielle d'extraction (48).

4. Outil à dénuder (1) selon la revendication 3, **caractérisé en ce que**
a) le corps de guidage (41) est maintenu, pendant la course de fermeture, de manière fixe sur une mâchoire d'outil correspondante (mâchoire de pince 4),
b) la lame à dénuder (26) est appuyée de manière roulante ou glissante vers l'extérieur contre la surface de guidage (42) du corps de guidage (41) et
c) le corps de guidage (41) est mobile, pour le réglage de la transition (59, 61) de la zone de guidage de course partielle d'extraction (48) à la zone de guidage de course partielle à vide (49), par rapport à la mâchoire d'outil (mâchoire de pince 4) parallèlement à l'axe longitudinal (24) du logement (23).

5. Outil à dénuder (1) selon la revendication 3, **caractérisé en ce que**
a) le corps de guidage (64) est déplacé, pendant la course de fermeture, par rapport à la mâchoire d'outil (mâchoire de pince 4) correspondante et
b) l'appui roulant ou glissant du corps de guidage (64) a lieu avec la surface de guidage (65) contre un corps d'appui (66) maintenu fixe pendant la course de fermeture contre la mâchoire d'outil (mâchoire de pince 4),
c) moyennant quoi, pour le réglage de la transition entre la zone de guidage de course partielle d'extraction (48) et la zone de guidage de course partielle à vide (49), le corps d'appui (66) est mobile par rapport à la mâchoire d'outil (mâchoire de pince 4) parallèlement à l'axe longitudinal (24) du logement (23).

6. Outil à dénuder (1) selon la revendication 4 ou 5, **caractérisé en ce que** différentes positions du corps de guidage (41) ou du corps d'appui (66) sont sécurisées par l'intermédiaire d'un dispositif d'encliquetage, de serrage ou de verrouillage (92).

7. Outil à dénuder (1) selon la revendication 4 ou la revendication 6 en référence à la revendication 4, **caractérisé en ce que**, entre la lame à dénuder (26) et le corps de guidage (41) est disposé un corps intermédiaire (53) qui est déplacé, par un dispositif d'entraînement de l'outil à dénuder (1), conjointement avec la lame à dénuder (26) et qui forme une surface de contact (55) qui se déplace en glissant le long de la surface de guidage (42) du corps de guidage (41).

8. Outil à dénuder (1) selon l'une des revendications précédentes, **caractérisé en ce que** la lame à dénuder (26), un support de lame (36) maintenant la lame à dénuder, le corps intermédiaire (53) et/ou le corps de guidage (41) est/sont couplés avec une tige de traction (32), la tige de traction (32) étant déplacée, avec le parcours de la course de fermeture, parallèlement à l'axe longitudinal (24) du logement (23) de l'outil à dénuder (1).

9. Outil à dénuder (1) selon la revendication 8, **caractérisé en ce que** la tige de traction (32)
a) n'est pas déplacée pendant la course partielle de coupe et
b) est déplacée parallèlement à l'axe longitudinal (24) aussi bien pendant la course partielle d'extraction que pendant la course partielle à vide.

10. Outil à dénuder (1) selon la revendication 8 ou 9, **caractérisé en ce que** l'actionnement de la tige de traction (32) a lieu par l'intermédiaire d'un levier de pression (28) articulé, dans une partie d'extrémité, avec un levier à main mobile (7), qui est appuyé, à une autre partie d'extrémité, pendant la course de fermeture, de manière roulante ou glissante contre une surface de guidage (30) d'une mâchoire d'outil (mâchoire de pince 8) mobile et est appuyée de manière roulante ou glissante contre la tige de traction (32), la répartition de la force dans le levier de pression (28) sur la surface de guidage (30) de la mâchoire d'outil (mâchoire de pince 8) mobile d'une part et sur la tige de traction (32) d'autre part, dépendant de l'inclinaison de la surface de guidage (30) et de l'angle du levier de pression (28).

11. Outil à dénuder (1) selon l'une des revendications précédentes, **caractérisé en ce qu'**un dispositif de sécurisation (21) est prévu, à l'aide duquel l'outil à dénuder (1) peut être sécurisé dans une position au moins partiellement fermée.

12. Outil à dénuder (1) selon la revendication 11, **caractérisé en ce que** le dispositif de sécurisation (21) est déclenché automatiquement par l'actionnement du dispositif d'entraînement de l'outil à dénuder (1).

13. Outil à dénuder (1) selon l'une des revendications précédentes, **caractérisé en ce qu'**un dispositif de séparation (13) est prévu pour le sectionnement d'un câble (56), le dispositif de séparation (56) pouvant être fermé à l'aide d'un dispositif de protection (82).

14. Outil à dénuder (1) selon la revendication 13, **caractérisé en ce que** le dispositif de protection (82) est mis, automatiquement lors du parcours de la course de fermeture, dans une position de protection, dans laquelle il reste même lors d'une inversion de la course de fermeture.

15. Outil à dénuder (1) selon l'une des revendications précédentes, **caractérisé en ce qu'**un dispositif de réglage de la profondeur de coupe (17) est prévu, qui permet de régler la distance d'au moins une lame à dénuder (25) transversalement par rapport à l'axe longitudinal (24) du logement à la fin de course partielle de coupe.

16. Outil à dénuder (1) selon la revendication 15, **caractérisé en ce que** le dispositif de réglage de la profondeur de coupe (17) d'une part et le guidage de la lame à dénuder (26), avec la zone de guidage de course partielle d'extraction (48) et la zone de guidage de course partielle à vide (49) d'autre part, correspondent à différentes mâchoires d'outil (mâchoire de pince 8 ; mâchoire de pince 4).

17. Outil à dénuder (1) selon l'une des revendications précédentes, **caractérisé en ce que** la course de fermeture présente une course partielle d'ouverture suivant la course partielle à vide.

18. Outil à dénuder (1) selon l'une des revendications précédentes, **caractérisé en ce que** les lames à dénuder (25, 26) peuvent être changées, un changement des lames à dénuder (25, 26) n'étant possible que lorsque la transition (59 ; 61) entre la course partielle d'extraction et la course partielle à vide
a) correspond à une transition prédéterminée ou
b) se trouve dans un intervalle de transition prédéterminé.
